# NEUE EUROPÄISCHE PATENTSCHRIFT

(11) **EP 2 639 186 B2**
(45) Veröffentlichungstag und Bekanntmachung des Hinweises auf die Entscheidung über den Einspruch: **26.02.2020**
(45) Hinweis auf die Patenterteilung: 05.10.2016
(21) Anmeldenummer: 13158692.7
(22) Anmeldetag: 12.03.2013
(51) Int. Cl.: B65G 1/127, B65G 1/137

(54) **Lager, insbesondere Kommissionierungslager und Verfahren für dessen Betrieb**
Storage, in particular picking storage and storage management system, and method for operating the same
Entrepôt, notamment entrepôt de préparation des commandes et système d'administration d'entrepôt et procédé de fonctionnement de celui-ci

(30) Priorität: 12.03.2012 DE 102012102075
(43) Veröffentlichungstag der Anmeldung: 18.09.2013
(73) Patentinhaber: Kardex Produktion Deutschland GmbH, 76756 Bellheim (DE)
(72) Erfinder: Schäffler, Reinhold, 86480 Waltenhausen-Weiler (DE)
(74) Vertreter: Grünecker Patent- und Rechtsanwälte PartG mbB

(56) Entgegenhaltungen:
- EP-A1- 0 403 726
- EP-A2- 1 452 462
- EP-A2- 1 452 462
- EP-A2- 1 964 792
- WO-A1-2010/090515
- WO-A1-2010/090515
- DE-A1- 2 843 201
- DE-A1- 3 830 373
- DE-A1-102009 032 406
- DE-A1-102009 032 406
- DE-A1-102010 015 414
- GB-A- 499 233
- US-A- 5 129 777
- US-A1- 2004 238 326
- US-A1- 2004 238 326
- US-A1- 2009 324 378
- US-A1- 2009 324 378

## Beschreibung

Die vorliegende Erfindung betrifft ein Lager zur Kommissionierung gemäß dem Oberbegriff des Anspruchs 1.

Eine Weiterbildung der Erfindung betrifft ein Lager mit einem Lagerverwaltungssystem zur Steuerung eines Lagers.

Ferner betrifft die Erfindung ein Verfahren zum Kommissionieren von Stückgutartikeln, die von Lagergutträgern getragen auf Lagerplätzen gelagert und auf einer Transportbahn transportiert werden, gemäß dem Oberbegriff des Anspruchs 9.

Lager zur Kommissionierung bzw. Kommissionierlager sind aus dem Stand der Technik bekannt. Derartige Lager werden zum Zusammenstellen von Teilmengen (Artikeln) aus einer Gesamtmenge verfügbarer Artikel (Sortiment) anhand eines Lieferauftrages verwendet. Dabei werden die Artikel meistens sortenrein auf Paletten als sogenannte Großgebinde angeliefert. Aus diesen Großgebinden werden auftragsgemäß angeforderte Teilmengen entnommen. Danach wird das Großgebinde mit den restlichen Artikeln zurück zu seinem Lagerplatz befördert.

Es besteht stets das Bedürfnis, Lagerkosten zu minimieren. Lagerkostenminimierung geschieht beispielsweise durch die Beschleunigung von Ein- und Auslagerungsvorgängen sowie durch die Vergrößerung und Zentralisierung von Lagern. Gleichzeitig besteht das Bedürfnis, Lagergüter möglichst filialgerecht zu kommissionieren. In anderen Worten sollen sogenannte Kollis, also Stückgüter bzw. kleinste zu kommissionierende Einheiten, zu möglichst geringen Kosten bereitgestellt werden. Die Kollis werden in der Regel aus Großabnahmemengen entnommen oder zusammengestellt, die beispielsweise auf Paletten bereitgestellt sind. Die auf den Paletten enthaltenen Waren müssen depalettiert und dann als Kollis je nach von einer Filiale bestellter Abnahmemenge versandfertig, beispielsweise auf Paletten, bereitgestellt werden.

Insbesondere der Aufwand für die versandfertige Bereitstellung erhöht sich mit der Anzahl und Unterschiedlichkeit der zu kommissionierenden Waren. So können bei einer Filialbelleferung beispielsweise Sortimente aus dem Lebensmitteleinzelhandel (LEH), wie dem Trockensortiment (Troso), den Molkereiprodukten (Mopro), von Getränken oder von Nonfood-Artikeln bestellt sein, was eine Mischpalettenbildung erfordert. Bei Mischpaletten ist zu beachten, dass diese einen statisch stabilen Aufbau aufweisen, in dem schwere und stabile Produkte unten angeordnet und leichtere, zerbrechlichere Produkte auf den schwereren abgelegt und anschließend die Produkte gesichert werden. Zudem werden Waren aus Kommissionierungslagern teilweise direkt an Endkunden ausgeliefert (Business to Customer - BTC). Bei einem Produktionslager können beispielsweise Einzelteile der Produktion zugeführt werden.

Aus der US 2009/0324378 A1 ist ein Lagersystem und ein Verfahren bekannt, wobei Waren aus einem Palettenhochlager entnommen und mittels Lagergutträgern auf Transportbahnen zu Pack- oder Pickstationen befördert werden. Die DE 10 2009 032 406 A1 zeigt ein Hochregallager mit mehreren Lagergassen, wobei darin übereinander angeordnete Lagerebenen jeweils mit Führungsbahnen für daran entlang verfahrbare Förderfahrzeuge versehen sind. Die EP 0 403 726 A1 beschreibt einen Automaten zur Kommissionierung von stückgutartigen, insbesondere Pharmaprodukten, die auf übereinander angeordneten Lagerplätzen gestapelt von Schiebern auf Förderbänder gestoßen werden, welche die Produkte in Kommissionierbehälter transportieren, die auf einem weiteren Förderband getaktet in eine Packstation geführt werden.

Aus dem Stand der Technik bekannte Lager vermögen die oben genannten Anforderungen bei einer Kommissionierung von Kollis nicht vollständig zu befriedigen. So sind die Handhabungsbzw. Handlingzeiten zu lang.

Der Erfindung liegt folglich die Aufgabe zugrunde, ein möglichst weitgehend automatisiertes Lager zur Kommissionierung von Kollis bereitzustellen.

Diese Aufgabe wird erfindungsgemäß für das eingangs genannte Lager dadurch gelöst, dass eine Verschiebeeinrichtung zum Verschieben von Lagergutträgern aus den wenigstens zwei Lagersystemen auf die jeweilige Transportbahn und zum Verschieben von Lagergutträgern von den wenigstens zwei Transportbahnen in das jeweilige Lagersystem zwischen den wenigstens zwei Transportbahnen angeordnet ist.

Im eingangs genannten Verfahren wird die Aufgabe dadurch gelöst, dass die Lagergutträger aus den wenigstens zwei Lagersystemen auf die jeweilige Transportbahn und von den wenigstens zwei Transportbahnen in das jeweilige Lagersystem durch eine zwischen den wenigstens zwei Transportbahnen angeordnete Verschiebeeinrichtung verschoben werden.

Die erfindungsgemäßen Lösungen haben zunächst den Vorteil, dass automatisierte Lagersysteme zur Bereitstellung der Stückgüter verwendet werden. So weisen derartige Lagersysteme meist Beschickungs- und/oder Entnahmeöffnungen auf, an denen Beschickungs- und/oder Entnahmevorrichtungen angeordnet sein können, um Lagergutträger in die Öffnungen hineinzuschieben bzw. aus diesen herauszuziehen. Somit lassen sich die Einlagerungs- und/oder Auslagerungsvorgänge automatisieren und folglich beschleunigen. Die Kollis bzw. auf Lagergutträgern angeordnete Waren können schnell und automatisch in die Lagersysteme ein- oder aus diesen ausgelagert werden. Die Lagersysteme können weitgehend autark arbeiten bzw. in sich geschlossen sein. Der Transport der Lagergutträger zu den Lagersystemen und von diesen weg erfolgt jeweils über Transportbahnen, die ihrerseits automatisiert und beispielsweise als Rollenbahn und/oder Laufbänder ausgestaltet sein können.

Durch die Verwendung von wenigstens zwei Lagersystemen, an die jeweils eine Transportbahn grenzt, können Kommissionierungsaufträge parallel und/oder seriell abgearbeitet werden. Die aus den Lagersystemen zur Kommissionierung entnommenen Lagergüter können auf den wenigstens zwei Transportbahnen zur weiteren bzw. zentralen Transportbahn befördert und auf dieser in einer gewünschten Palettierungsreihenfolge zur Palettierungsstation transportiert werden. Somit sind einzelne oder mehrere Aufträge parallel und aufeinanderfolgende Aufträge in schneller Abfolge bearbeitbar.

Die erfindungsgemäßen Lösungen können mit den folgenden weiteren, jeweils für sich vorteilhaften Ausführungsformen beliebig kombiniert und weiter verbessert werden:
Beim eingangs genannten Lager mit einem Lagerverwaltungssystem kann ein Kommissionierungsreihenfolgemodul vorgesehen sein, das ausgestaltet ist, im Betrieb des Lagers aus den wenigstens zwei Lagersystemen parallel und/oder seriell entnommene Lagergutträger auf einer in die Palettierungsstation mündenden Transportvorrichtung in einer Palettierungsreihenfolge aufzureihen.

Der Aufbau eines erfindungsgemäßen Lagers lässt sich verbessern, indem die wenigstens zwei Lagersysteme an der Transportbahn und/oder der weiteren Transportbahn sich gegenüberliegend angeordnet sind. Die Transportbahn und/oder die weitere Transportbahn sind bzw. können Teil einer Transportvorrichtung sein, in der zwei Transportbahnen zumindest abschnittsweise neben- und parallel zueinander verlaufen können. Wenn die Lagersysteme sich an der Transportbahn gegenüberliegend angeordnet sind, können die Lagergutträger in einer gewünschten Reihenfolge aus beiden Lagersystemen auf die Transportbahn gezogen werden. Bei zwei sich an der weiteren Transportbahn gegenüberliegend angeordneten Lagersystemen können Aufträge simultan abgewickelt werden bzw. eine Kommission an mehreren Lagersystemen gleichzeitig zusammengestellt werden, indem entsprechende Lagergutträger gleichzeitig aus den Lagersystemen auf die Transportbahnen befördert werden, die in die weitere Transportbahn münden können.

Eine parallele Bearbeitung von mehreren Aufträgen oder eines einzelnen Auftrags lässt sich weiter vereinfachen, indem die Transportbahn und/oder die weitere Transportbahn zumindest abschnittsweise parallel ober- oder unterhalb einer zusätzlichen Transportbahn bzw. zusätzlichen weiteren Transportbahn verlaufen und wobei die wenigstens zwei Lagersysteme jeweils wenigstens zwei Beschickungs- und/oder Entnahmestellen aufweisen, über welche wenigstens zwei Lagergutträger gleichzeitig in die wenigstens zwei Lagersysteme ein- bzw. aus den wenigstens zwei Lagersystemen ausgelagert werden können. Die wenigstens zwei Beschickungs- und/oder Entnahmestellen der wenigstens zwei Lagersysteme können jeweils neben- und/oder übereinander angeordnet sein. So lassen sich an mehreren Beschickungs- und/oder Entnahmestellen gleichzeitig Lagergutträger in die Lagersystemen ein- und/oder aus diesen auslagern.

Zurweiteren Automatisierung und Beschleunigung der Kommissionierung ist eine automatisierte Beschickungs- und/oder Entnahmevorrichtung zum Einlagern von Lagergutträgern in die wenigstens zwei Lagersysteme bzw. zum Auslagern von Lagergutträgern aus den wenigstens zwei Lagersystemen zwischen den wenigstens zwei Lagersystemen angeordnet. Derartige Beschickungs- und/oder Entnahmevorrichtungen können zum Beschicken der automatisierten Lagersysteme mit Lagergutträgern bzw. zum Entfernen der Lagergutträger aus den Lagersystemen mit Verschiebeeinrichtungen ausgestaltet sein, mit deren Hilfe Lagergutträger in einer Einlagerungsrichtung und in einer Auslagerungsrichtung an Beschickungs- und/oder Entnahmestellen der Lagersysteme mit den Lagergutträgern zusammenwirken können. So können Lagersysteme Beschickungs- und/oder Entnahmeöffnungen aufweisen, an denen die Beschickungs- und/oder Entnahmevorrichtungen angeordnet sein können, um Lagergutträger in die Öffnungen hineinzuschieben bzw. aus diesen herauszuziehen. Die erfindungsgemäßen Verschiebeeinrichtungen der Beschickungs- und/oder Entnahmevorrichtungen können so ausgestaltet sein, dass sie an einer von der Beschickungs- und/oder Entnahmestelle beabstandeten weiteren Beschickungs- und/oder Entnahmestelle des Lagersystems mit wenigstens einem weiteren Lagergutträger zusammenwirken, um eine parallele Beschickung und/oder Entnahme von Lagergutträgern zu vereinfachen.

In anderen Worten können mit der Beschickungs- und/oder Entnahmevorrichtung also eine Vielzahl von Lagergutträgern durch Verschieben an der Vielzahl von Beschickungs- und/oder Entnahmestellen in das jeweilige Lagersystem ein- bzw. aus diesem ausgelagert werden. Somit können mit den Beschickungs- und/oder Entnahmevorrichtungen mehrere Beschickungs- und/oder Entnahmestellen bedient werden. Die Kollis bzw. auf Lagergutträgern angeordneten Waren können schnell und automatisch von einer Beschickungs- und/oder Entnahmevorrichtung ein- bzw. ausgelagert werden. Die Ein- und/oder Auslagerung kann direkt auf eine Transportbahn bzw. eine mehrere Transportbahnen umfassende Transportvorrichtung erfolgen. Eine Verschiebeeinrichtung zum Verschieben von Lagergutträgern aus den wenigstens zwei Lagersystemen auf die jeweilige Transportbahn und zum Verschieben von Lagergutträgern von den wenigstens zwei Transportbahnen in das jeweilige Lagersystem ist zwischen den wenigstens zwei Transportbahnen angeordnet.

Die Kommissionierung lässt sich weiter automatisieren und beschleunigen, indem die wenigstens zwei Lagersysteme als Paternosterlager und/oder Lagerlift ausgestaltet sein können. In Paternoster- bzw. Umlauflagern können Lagergutträger auf umlaufenden Ablagen eingelagert und durch Zirkulation des gesamten Lagerbestandes im jeweiligen Lagersystem auf mehreren Lagerplätzen, die auf einer gemeinsamen Höhe angeordnet sind, gleichzeitig zur Beschickungs- und/oder Entnahmeöffnung hin oder von dieser weg transportiert werden.

Ein erfindungsgemäßes Lager lässt sich dadurch weiter verbessern, indem das Lager ein Lagerbeständeerfassungsmodul, ein Transportwegeermittlungsmodul und ein Kommissionierungsdauerberechnungsmodul umfasst, wobei das Lagerbeständeerfassungsmodul ausgestaltet ist, Lagerbestände von Stückgutartikeln in den wenigstens zwei Lagersystemen zu erfassen, das Transportwegeermittlungsmodul ausgestaltet ist, Transportwege zwischen den erfassten Lagerbeständen und der Palettierungsstation zu ermitteln, und das Kommissionierungsdauerberechnungsmodul ausgestaltet ist, in Abhängigkeit von den ermittelten Lagerbeständen und Transportwegen eine kürzestmögliche Kommissionierungsdauer zu errechnen. Somit können in verschiedenen Lagersystemen angeordnete Lagergutträger bei der Errechnung einer kürzestmöglichen Kommissionierungsdauer unter gewünschter Palettierungsreihenfolge berücksichtigt werden. Eine Abwägung zwischen Auslagerungszeiten der Lagergutträger in einer gewünschten Reihenfolge und den jeweiligen Transportdauern auf den Transportbahnen ist möglich. Insbesondere bei einer chaotischen Lagerführung, die bei einem erfindungsgemäßen Lagersystem angewandt werden kann, ist eine Vielzahl von Lagersystemkombinationen und sich daraus ergebenden Transportwegen möglich, aus denen jeweils die schnellste Abarbeitungs- bzw. Kommissionierungszeit für einen oder mehrere aufeinanderfolgende Kommissionierungsaufträge gewählt werden kann.

Ein eingangs genanntes Verfahren lässt sich dadurch weiter verbessern, indem wenigstens zwei einer zu kommissionierenden Warenmenge zugeordnete Lagergutträger gleichzeitig aus wenigstens einem der Lagersysteme aus- und/oder in wenigstens eines der Lagersysteme eingelagert werden. Durch die gleichzeitige Ein- und/oder Auslagerung können Beschickungs- und/oder Entnahmezeiten insgesamt verkürzt werden.

Eine gleichzeitige Ein- und/oder Auslagerung lässt sich beispielsweise dadurch weiter vereinfachen, dass Stückgutartikel auf den Lagergutträgern in den wenigstens zwei Lagersystemen vorkommissioniert werden. So können verschiedene Stückgutartikel auf nebeneinander angeordneten Lagerplätzen eingelagert sein, um diese Lagerplätze beispielsweise mit Hilfe eines Paternosterlagers gleichzeitig an den Lagerplätzen zugewiesene Beschickungs- und/oder Entnahmestellen zu befördern und somit ganze Kommissionen oder zumindest Teile davon gleichzeitig in die Lagersysteme ein- bzw. aus diesen auszulagern.

Eine weitere Parallelisierung von Ein- und/oder Auslagerungsvorgängen ist möglich, indem gleiche Stückgutartikel in wenigstens zwei der wenigstens zwei Lagersystemen gelagert sein können. Somit können bei der Errechnung kürzester Kommissionierungsdauern in mehreren Lagersystemen befindliche Lagergüter gleicher Art berücksichtigt werden. Eine derartige Mehrfacheinlagerung von Lagergutträgern in verschiedenen Lagersystemen erhöht des Weiteren die Redundanz eines erfindungsgemäßen Lagers.

Kommissionierungsaufträge lassen sich weiter beschleunigt abarbeiten, indem die Lagergutträger in einer vordefinierten Stapelreihenfolge auf der weiteren Transportbahn zur Palettierungsstation transportiert werden. So können die Lagergutträger beispielsweise nach einer parallelen Auslagerung parallel über Transportbahnen zur weiteren Transportbahn befördert werden, auf der sie seriell in einer gewünschten Packreihenfolge angeordnet sind. Eine gewünschte Packreihenfolge kann sich insbesondere aus äußeren Abmaßen und der Stabilität der Lagergüter ergeben. So sind große, möglichste quaderförmige Lagergüter weiter unten auf einer Palette anzuordnen, um darauf leichtere und weniger einfach stapelbare Lagergüter abzulegen.

Die vorliegende Erfindung ermöglicht eine vollständige Automatisierung eines Lagers, insbesondere eines Kommissionierungslagers, in dem Waren sortenrein auf Produktpaletten angeliefert und möglichst schnell zu Kollis kommissioniert werden sollen. Die Produktpaletten (Originalpaletten) können beispielsweise aus einem Nachschublager zu einem Vereinzelungsbereich per Stapler oder Fördertechnik transportiert werden. Dieser Prozess kann von einem übergeordneten Warenmanagementsystem (WMS) gesteuert sein. Beispielsweise mittels Barcodes (EAN) kann eine Produktpalette identifiziert werden. Diese Information kann dann ein Materialflussrechner (PPG) für die Ansteuerung eines automatischen Depalettierungsroboters oder alternativ der Steuerung eines Hubtisches an einem manuellen Depalettierungsplatz nutzen. Originalpaletten können in der Regel komplett depalettiert und die Leerpaletten in einem Leerpalettenpuffer (Magazin) gespeichert werden. Ist die maximale Kapazität dieses Magazins erreicht, so können Leerpalettenstapel in der Fläche gelagert werden.

Sich aus den Produktpaletten ergebene vereinzelte Kollis können per Gurtförderer zu einer automatisierten Station transportiert werden, in der die Kollis auf Lagergutträger, sogenannte Trays gesetzt werden. Die Produktinformation bzw. der EAN-Code kann mit einer eindeutigen Lagergutträgeridentifizierungsnummer (Barcode) verknüpft werden. Somit kann der Kolli bis einer Verbringung auf die/den Zielpaletten/Zielrollbehälter eindeutig identifiziert werden. Die Lagergutträgeridentifizierungsnummer dient zusätzlich zur Steuerung der Lagergutträger auf dem Lagergutträger-Fördersystem sowie zur Ein- und Auslagerung der Lagergutträger bzw. Kollis in einem dynamischen Lagergutträgerpufferspeicher, der als automatisiertes Lagersystem, wie oben beschrieben, ausgeführt sein kann. Die Lagergutträger können dann in einem Magazin bzw. Lagersystem für leere Lagergutträger stapelweise zwischengepuffert werden. Dieses Magazin kann Packplätze von der Station entkoppeln, auf der Kollis auf die Lagergutträger gesetzt werden.

Zur Einlagerung können die Lagergutträger auf einer als Zentraleinlagerförderbahn dienenden Transportvorrichtung in sogenannten Clustern eingelagert werden. Die Aufteilung der Lagergutträger in die Cluster kann (je nach Palette) nach Füllgrad bzw. Auslastung der einzelnen die Klasse bildenden Lagersysteme geschehen. Ein Nachschub aus dem Nachschublager kann in den Cluster erfolgen, in dem sich die zugehörigen Waren befinden.

Die Lagergutträger mit den Kollis können in einem oder mehreren als dynamischen Kollipuffer (DKP) eingesetzten Lagersystem bzw. Lagersystemen nach den folgenden Gesichtspunkten verteilt werden:
- Gleichverteilung der Kollis innerhalb eines Clusters;
- Berücksichtigung der Gängigkeit der Produkte (ABC-Kommissionierung);
- Verteilung der Kollis innerhalb eines Lagersystems auf eine beliebige Anzahl verschiedener Träger, insbesondere eines Umlauflagers; und/oder
- Berücksichtigung einer maximal zulässigen Unlast in einem Lagersystem.

Durch diese Einlagerungsstrategien kann bei der Auslagerung der mit den Kollis bestückten Lagergutträgern eine möglichst optimale (kurze) Zugriffszeit auf das nächste erforderliche Produkt sichergestellt werden. Durch eine Auswahl von Optionen aus einem Cluster kann eine erste Sequenzierungsstufe für die versandgerechte/filialgerechte Palettierung erfolgen.

Auf einer als Auslagerförderbahn ausgestalteten Transportvorrichtung eines jeden Lagersystems können die erforderlichen mit den Kollis bestückten Lagergutträger in aufsteigender Produktionsreihenfolge (gemäß im Vorfeld ermittelter Auslagerungsreihenfolge der Zielpaletten/eines Kollikonfigurators) bereitgestellt werden. Eine finale Reihenfolgebildung kann durch eine Einschleusung der mit den Kollis versehenen Lagergutträger in eine als zentrale Abtransportbahn ausgelegte Transportvorrichtung erfolgen.

Packplätze können nach Aspekten der Arbeitsergonomie gestaltet sein und sicherstellen, dass eine anhaltend hohe Dauer-Leistung gepackt werden kann. Als kleine Pufferspeicher eingesetzte Lagersysteme am Packplatz können ein kontinuierliches Arbeiten am Packplatz ohne Unterbrechung ermöglichen. Eine Bedienperson bzw. ein Packer kann mittels eines Lichtpointers auf eine Zielposition für einen Kolli hingewiesen werden. Eine Zieleinheit (Palette oder Rolli) kann per Hubtisch lagenweise abwärts getaktet werden, damit ein ergonomisches Arbeiten auf annähernd gleicher Höhe sichergestellt ist. Verpackte Produkte können mittels einer Banderole automatisch gesichert und anschließend per Fördertechnik an eine zentrale Stelle transportiert und automatisch gewickelt werden. Hier kann jede Palette bzw. jeder Rolli ein Versandetikett erhalten, das vom WMS erzeugbar ist.

In einem erfindungsgemäßen Lager helfen erfindungsgemäße Beschickungs- und/oder Entnahmevorrichtungen mit Verschiebeeinrichtungen, die mehrere Beschickungs- und/oder Entnahmestellen bedienen, auf technisch einfachem Wege, Lagergutträger einzeln und/oder als komplette Lagen ein- und/oder auszulagern. Eine Kombination von Ein- und/oder Auslagerungsvorgängen ist möglich. Darauf reduzieren niedrige Ein- und/oder Auslagerungszeiten, auch als Pickzeiten bezeichnet, die zu schnellen Ein- und/oder Auslagerungsvorgängen und somit hohen Pickzahlen beitragen. Die Verschiebeeinrichtungen können durch ihren möglichst einfachen Aufbau eine möglichst geringe Störanfälligkeit aufweisen und mehrere Lagersysteme bedienen. Lagergutträger sind nicht zwingend erforderlich, aber von Vorteil, um die Waren technisch vereinheitlicht zu handhaben. Die Lagergutträger können beispielsweise aus Kunststoff gefertigt sein.

Eine erfindungsgemäße Beschickungs- und/oder Entnahmevorrichtung erlaubt eine lagenweise Ein- bzw. Auslagerung. Auch eine einzelne Ein- und/oder Auslagerung ist möglich. Einzelne Ein- und/oder Auslagerungen sind im Doppelspiel möglich. Eine Ein- und Auslagerungsreihenfolge kann beliebig gewählt sein. Die Nutzung eines zusätzlichen automatischen Kommissionierungslager-Moduls ermöglicht eine Erweiterung des Sortiments bzw. der Anzahl kommissionierter Artikel. Durch einen Einsatz von zwei Lagersystemen als Pufferlager bzw. Lagersortierer kann eine Anzahl unterschiedlicher Artikel weiter erhöht werden.

Als Transportvorrichtungen können Rollenförderer von den Depalettierstationen zu den Lagersystemen eingesetzt werden. Je Lagersystem bzw. Kombination sich gegenüberliegender Lagersysteme können zwei parallel verlaufende Transportvorrichtungen in Form von Staurollenförderern eingesetzt werden. Eine Transportvorrichtung in Form eines Staurollenbandes mit Pufferplätzen kann für eine Vorsortierung vorgesehen werden. Optional ist es möglich, zwei gegenüberliegende Lagersysteme für eine Lagenpufferung und Sequenzierung einzusetzen. Darüber hinaus können über die Transportvorrichtungen Leer-Ladungsträger-Transporte vorgenommen werden.

Ein erfindungsgemäßes Lager kann einen modularen Aufbau aufweisen, in dem sämtliche Beschickungs- und/oder Entnahmevorrichtungskomponenten sowie Lagersystemvarianten je nach Art zu kommissionierender Artikel (Schnell-/Langsamdreher) kombiniert werden können. Artikel mit Sondermaßen sowie Langsamdreher können manuell eingeschleust werden. Ein Sequenzer kann bei vielen unterschiedlichen Artikeln verwendet werden. Alle Lagervarianten können in allen Richtungen modular aufgebaut und erweiterbar sein.

In einem Normalbetrieb eines erfindungsgemäßen Lagers können zunächst einzelne oder mehrere Lagergutträger bzw. Trays aus einem Lagersystem ausgelagert werden. Die ausgelagerten Lagergutträger können abtransportiert und parallel bzw. direkt anschließend an die Auslagerung können einzulagernde Lagergutträger auf dieselbe Position auf dem Transportsystem bzw. einer Transportvorrichtung oder Transportbahn bereitgestellt werden, ab der die ausgelagerten Lagergutträger ausgelagert wurden. Anschließend können die einzulagernden Lagergutträger auf dieselbe Position, dieselben Beschickungs- und/oder Entnahmestellen bzw. Lagerplätze oder dasselbe Lagerabteil im Lagersystem durch die Beschickungs- und/oder Entnahmevorrichtung eingelagert werden. Dieser Vorgang kann sowohl auf einer Ebene als auch auf zwei übereinander liegenden Ebenen erfolgen. Bei einer Ausführung des Ein- und/oder Auslagerungsprozesses im Normalbetrieb können bei zwei Ebenen die einzulagernden Lagergutträger parallel auf der unteren Ebene bereitgestellt werden. Nach dem Auslagern auf der oberen bzw. darüber liegenden Ebene kann das Lagersystem das Lagerabteil bzw. die Lagerplätze auf die untere Position verfahren und es können auf das gleiche Lagerabteil bzw. die gleichen Lagerplätze die Lagergutträger eingelagert werden.

In einem Ein- und/oder Auslagerungsprozess beim Befüll- und/oder Entleervorgang eines erfindungsgemäßen Lagers bzw. einzelner Lagersysteme können sowohl einzelne als auch mehrere Lagergutträger, bei den hierin beispielhaft erläuterten Ausführungsformen neun Stück, nur eingelagert werden, ohne dass davor oder danach ausgelagert wird. Beim Entleeren des Lagers bzw. einzelner Lagersysteme können sowohl einzelne als auch mehrere Lagergutträger, bei den vorliegenden beispielhaften Ausführungsformen z. B. neun Stück, nur ausgelagert werden, ohne dass davor oder danach eingelagert wird.

Bei einem Ein- und/oder Auslagerungsprozess mit Sonderabläufen in einem erfindungsgemäßen Lager können nach dem Auslagerungsprozess nicht nur auf den ausgelagerten Positionen bzw. Lagerplätzen, sondern auch auf zusätzlichen leeren Lagerplätzen Lagergutträger eingelagert werden, falls in den jeweiligen Lagerabteilen des oder der Lagersysteme noch zusätzliche leere Lagerplätze vorhanden sind. Bei einer Variante mit zwei übereinander liegenden Ebenen zur Ein- und/oder Auslagerung bzw. zwei übereinander liegenden Beschickungs- und/oder Entnahmeöffnungen, kann das Einlagern auch schon zur gleichen Zeit wie das Auslagern auf einer anderen darunter und/oder darüber liegenden Ebene bzw. einem Lagerabteil parallel erfolgen. Somit können bei einem Auslagervorgang parallel zwei nacheinander folgende Einlagerungen auf zwei unterschiedlichen Lagerabteilen bzw. über- und/oder untereinander liegenden Lagerplätzen oder Beschickungs- und/oder Entnahmestellen erfolgen.

Im Folgenden ist die Erfindung beispielhaft anhand möglicher Ausführungsformen in Bezug auf die beigefügten Zeichnungen genauer beschrieben. Die bei diesen Ausführungsformen dargestellten Merkmalskombinationen dienen lediglich Anschauungszwecken. Einzelne Merkmale können nach Maßgabe ihrer oben beschriebenen Vorteile auch weggelassen werden, wenn es bei bestimmten Anwendungen auf den Vorteil des jeweiligen Merkmals nicht ankommt.

Es zeigen:
- Fig. 1: eine schematische Perspektivansicht eines erfindungsgemäßen Lagers;
- Fig. 2: eine schematische Perspektivansicht eines erfindungsgemäßen Lagergutträgers mit darauf abgelegtem Lagergut;
- Fig. 3: eine schematische Perspektivansicht eines erfindungsgemäß eingesetzten Lagersystems mit daran angrenzender Transportbahn und Beschickungs- und/oder Entnahmevorrichtung;
- Fig. 4: eine schematische Vorderansicht des in Fig. 3 gezeigten Lagersystems mit Transportbahn und Beschickungs- und/oder Entnahmevorrichtung;
- Fig. 5: eine schematische Perspektivansicht einer weiteren Ausführungsform eines erfindungsgemäß eingesetzten Lagersystems mit daran angrenzender Transportvorrichtung und einer weiteren Ausführungsform einer Beschickungs- und/oder Entnahmevorrichtung;
- Fig. 6: eine schematische Vorderansicht des in Fig. 5 gezeigten Lagersystems mit Transportvorrichtung sowie Beschickungs- und/oder Entnahmevorrichtung;
- Fig. 7: eine schematische Draufsicht auf die Anordnung einer Transportvorrichtung mit zwei Transportbahnen zwischen zwei Lagersystemen, wobei zwischen den Transportbahnen eine Beschickungs- und/oder Entnahmevorrichtung angeordnet ist;
- Fig. 8: ein schematisches Blockdiagramm erfindungsgemäßer Lagerverwaltungsvorgänge;
- Fig. 9: eine schematische Darstellung einer funktionellen Untergliederung einer Ausführungsform eines erfindungsgemäßen Lagers;
- Fig. 10: eine schematische Draufsicht auf das in Fig. 9 skizzierte Lager;
- Fig. 11: eine schematische Darstellung von Einlagerungsvorgängen;
- Fig. 12: eine schematische Darstellung von Auslagerungsvorgängen;
- Fig. 13: eine schematische Darstellung einer Palettierungsreihenfolge auf einer Transportbahn;
- Fig. 14: eine schematische Darstellung der gemäß in Fig. 13 gezeigten Palettierungsreihenfolge palettierten Lagergüter;
- Fig. 15: eine schematische Darstellung eines funktionellen Aufbaus einer weiteren Ausführungsform eines erfindungsgemäßen Lagers;
- Fig. 16: eine schematische Draufsicht auf das in Fig. 15 dargestellte Lager;
- Fig. 17: eine schematische Darstellung eines funktionellen Aufbaus einer weiteren Ausführungsform eines erfindungsgemäßen Lagers;
- Fig. 18: eine schematische Draufsicht auf das in Fig. 17 dargestellte Lager;
- Fig. 19: ein schematisches Blockdiagramm einer Ausführungsform eines erfindungsgemäßen Lagersteuerungssystems für ein erfindungsgemäßen Lager; und
- Fig. 20: eine schematische Darstellung eines erfindungsgemäßen Lagers mit Lagersteuerungssystem.

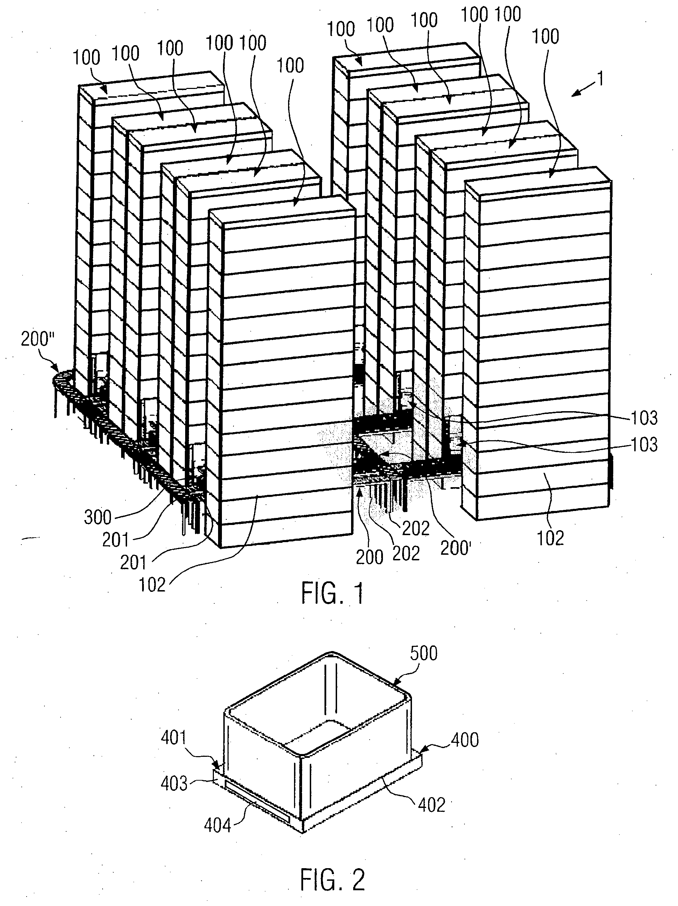

Fig. 1 zeigt ein erfindungsgemäßes Lager 1 in einer schematischen Perspektivdarstellung. Das Lager 1 umfasst eine Vielzahl von Lagersystemen 100, Transportvorrichtungen 200, eine weitere Transportvorrichtung 200' und eine umlaufende Transportvorrichtung 200" sowie Beschickungs- und/oder Entnahmevorrichtungen 300, die jeweils zwischen zwei sich an einer der Transportvorrichtungen 200 gegenüberliegend angeordneten Lagersystemen 100 angeordnet sind, und Lagergutträger 400 (hier noch nicht gezeigt). Die Lagersysteme 100 können als Lagerlift, Umlaufregallager oder Paternosterlager ausgestaltet sein. Ein Lagerraum 101 (nicht gezeigt) der Lagersysteme 100 ist von einem Gehäuse 102 umgeben. Auf einer den jeweiligen Transportvorrichtungen 200 zugewandten Seite der Lagersysteme 100 ist eine Beschickungs- und/oder Entnahmeöffnung 103 der Lagersysteme 100 angeordnet. Über die Beschickungs- und/oder Entnahmeöffnung 103 sind die Lagergutträger 400 in das Lagersystem 101 ein- bzw. aus diesem auslagerbar. Die Transportvorrichtung 200 verfügt über je zwei Transportbahnen 201, die als Rollenbahn, Förderbänder oder dergleichen ausgestaltet sein können. Die Transportbahnen 201 sind jeweils auf Ständern 202 gelagert.

Fig. 2 zeigt einen Lagergutträger 400 mit darauf abgelegtem Lagergut 500 in einer schematischen Perspektivansicht. Der Lagergutträger 400 besitzt eine Aufnahmefläche 401, die von einem Rand 402 umgeben ist. An seinen Stirnseiten 403 ist der Lagergutträger 400 jeweils mit wenigstens einem Handhabungselement 404 versehen, das ausgestaltet ist, zumindest eine Zugkraft am Lagergutträger 400 anzusetzen. So kann das Handhabungselement 404 beispielsweise eine metallische Fläche sein, die dazu ausgestaltet ist, durch durch eine Verschiebeeinrichtung 301 (hier noch nicht gezeigt) aufgebrachte Magnetkraft angezogen zu werden, damit der Lagergutträger 400 schieb- und ziehbar ist. Alternativ und zusätzlich kann das Handhabungselement 404 so ausgestaltet sein, dass es mit einem mechanisch wirkenden Zugelement 319 (hier noch nicht gezeigt) einer der Beschickungs- und/oder Entnahmevorrichtungen 300 in Eingriff bringbar ist, beispielsweise durch Form- und/oder Kraftschluss. Auch kann das Handhabungselement 404 so ausgestaltet sein, dass eine Ansaugfläche für ein pneumatisch bzw. über Unterdruck wirkendes Zugelement 319 bietet. In das Handhabungselement 404 kann ein Identifikationselement integriert sein. Über Identifikationselement kann ein Datenaustausch, beispielsweise über eine Sensorik 320 (hier noch nicht gezeigt) der Beschickungs- und/oder Entnahmevorrichtung 300 Informationen über die auf dem Lagergutträger 400 befindliche Ware bzw. das Lagergut 500 beziehen und/oder auf den Lagergutträger 400 übertragen, um ein ordnungsgemäßes Ein- bzw. Auslagern des Lagergutträgers 400 zu überprüfen und nachzuverfolgen.

Das Lagergut 500 ist in Fig. 1 in Form eines Kastens dargestellt, bei dem es sich beispielsweise um einen Getränkekasten handeln kann, der einen Kolli, also eine kleinste zu kommissionierende Einheit darstellen kann. Das Lagergut 500 ist auf dem Lagergutträger 400 positioniert.

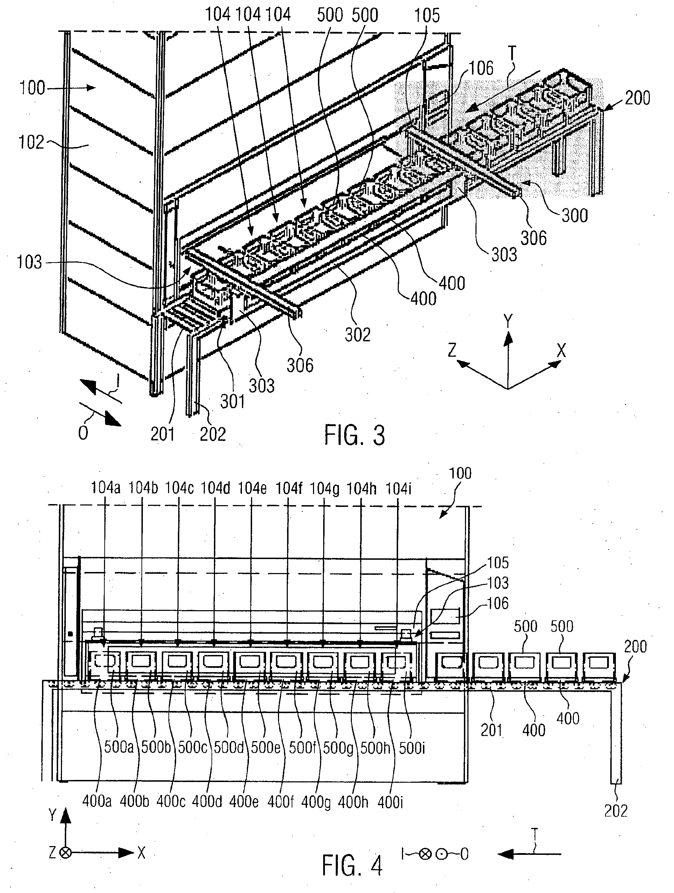

Fig. 3 zeigt ein erfindungsgemäß eingesetztes Lagersystem 100 mit davor angeordneter Transportvorrichtung 200 und Beschickungs- und/oder Entnahmevorrichtung 300 in einer schematischen Perspektivdarstellung. In einer Einlagerungsrichtung I, die im Wesentlichen quer zu einer Transportrichtung T der Transportvorrichtung 200 von dieser weg verläuft, geschieht die Einlagerung in das Lagersystem 100. Eine Auslagerungsrichtung O des Lagersystems 100 verläuft entgegengesetzt zur Einlagerungsrichtung I auf die Transportvorrichtung 200 zu. In anderen Worten verläuft die Einlagerungsrichtung I in einer Querrichtung Z des Lagersystems 100, die wiederum quer zu einer Höhenrichtung Y sowie einer Seitrichtung X des Lagersystems 100 verläuft.

In der Beschickungs- und/oder Entnahmeöffnung 103 sind eine Vielzahl von in Seitrichtung X bzw. Transportrichtung T sowie quer zur Einlagerungsrichtung I bzw. Auslagerungsrichtung O nebeneinander angeordnete Beschickungs- und/oder Entnahmestellen 104 vorgesehen. Über die Beschickungs- und/oder Entnahmestellen 104 ist jeweils mindestens ein Lagergutträger 400 in das Lagersystem 100 ein- bzw. aus diesem auslagerbar. Im vorliegenden Fall sind beispielsweise neun Beschickungs- und/oder Entnahmestellen 104 in Transportrichtung T nebeneinander angeordnet. Es kann auch eine beliebige Anzahl von Beschickungs- und/oder Entnahmestellen 104 vorgesehen sein.

Des Weiteren kann das Lagersystem 100 über ein Türelement 105 an der Beschickungs- und/oder Entnahmeöffnung 103 zum Verschließen des Lagerraums 101 verfügen, das als vertikal verschiebliche Schiebetür oder Rolltor ausgestaltet sein kann. Zur manuellen Bedienung und/oder Programmierung des Lagersystems 100 ist dieses mit einer Bedieneinrichtung 106 versehen, die auch als Computerschnittstelle dienen kann.

In Fig. 3 ist nur eine der beiden Transportbahnen 201 der Transportvorrichtung 200 dargestellt. Zwischen den Transportbahnen können Transfereinrichtungen 203 (nicht gezeigt) der Transportvorrichtung 200 vorgesehen sein, über die Lagergutträger 400 zwischen zwei parallel und/oder senkrecht zueinander verlaufenden Transportbahnen 201 a, 201 b (hier noch nicht gezeigt) ausgetauscht bzw. übergeben werden können. Auch ein Zwischenlagern von Lagergutträgern 400 auf den Transfereinrichtungen 203 ist denkbar, damit Lagergutträger 400 zur Beschickung oder nach der Entnahme in einer gewünschten Reihenfolge in der Transportrichtung T angeordnet werden können.

Die Beschickungs- und/oder Entnahmevorrichtung 300 verfügt über wenigstens eine Verschiebeeinrichtung 301, die wenigstens eine Verschiebeachse 302 umfasst. Die wenigstens eine Verschiebeachse 302 erstreckt sich in Transportrichtung T und ermöglicht es, über die ganze in Transportrichtung T bzw. Seitrichtung X gemessene Breite der Beschickungs- und/oder Entnahmeöffnung 103 bzw. über sämtliche Beschickungs- und/oder Entnahmestellen 104 Lagergutträger 400 in das Lagersystem 100 zu schieben bzw. aus diesem herauszuziehen.

Über zwei sich an einer Transportvorrichtung 200 gegenüberliegend angeordneten Lagersystemen 100 kann jedem der Lagersysteme jeweils eine Verschiebeachse 302a bzw. 302b (hier noch nicht gezeigt) zugeordnet sein. Die Verschiebeachsen 302, 302a, 302b können jeweils an zwei Aufhängungen 303 befestigt sein, die an jeweils in bzw. entgegen der Transportrichtung T weisenden Enden der Verschiebeachse 302, 302a, 302b angeordnet sein können. Die beiden Aufhängungen 303 können jeweils an einer Schiene 304 der Beschickungs- und/oder Entnahmevorrichtung 300 parallel zueinander beweglich montiert sein. An einer der beiden Aufhängungen 303 kann ein Elektromotor bzw. Servomotor 305 angeordnet sein. Der Elektromotor 305 kann eine Achse 306 antreiben, die mit beiden Aufhängungen 303 verbunden und dort jeweils in ein Getriebe 307 (nicht gezeigt) münden kann. Die Getriebe 307 können mit der jeweiligen Schiene 304 zusammenwirken, um die Verschiebeeinrichtung 301 in Einlagerungsrichtung I oder Auslagerungsrichtung O zu verfahren.

Fig. 4 zeigt das in Fig. 3 dargestellte Lagersystem 100 samt Transportvorrichtung 200, Lagergutträger 400 und Lagergütern 500 in einer schematischen Vorderansicht. Hier ist ersichtlich, dass die Lagergutträger 400 in Transportrichtung T in einer Reihe vor der Beschickungs- und/oder Entnahmeöffnung 103 angeordnet und bereit sind, gleichzeitig bzw. simultan in die Beschickungs- und/oder Entnahmeöffnung 103 geschoben zu werden bzw. aus der Beschickungs- und/oder Entnahmeöffnung 103 hinaus gezogen wurden. Die Beschickungs- und/oder Entnahmestellen 104 lassen sich als Beschickungs- und/oder Entnahmestellen 104a bis 104i definieren, denen entsprechend Lagergutträger 400a bis 400i mit darauf abgelegten Lagergütern 500a bis 500i zugewiesen sein können.

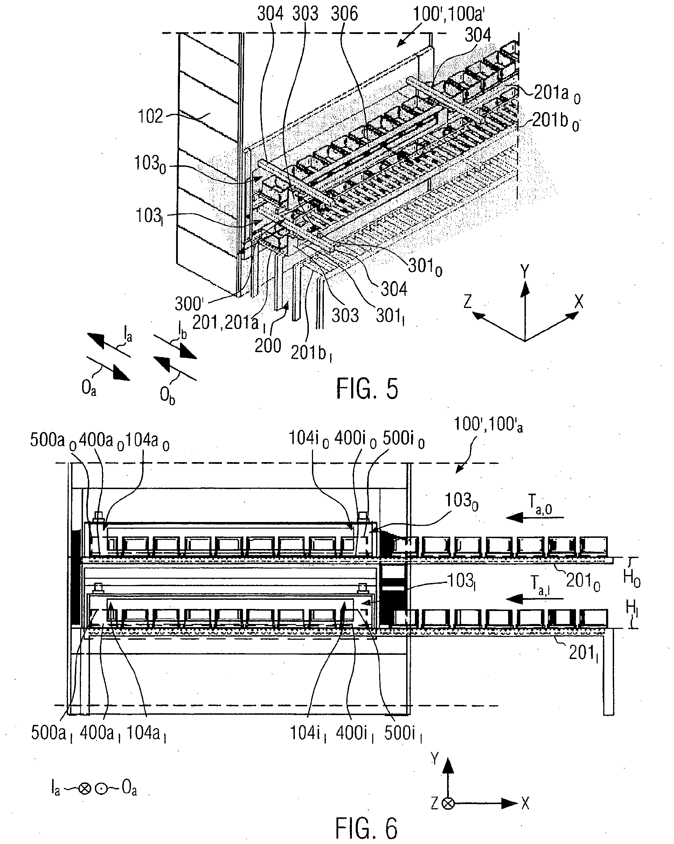

Fig. 5 zeigt eine schematische Perspektivansicht einer weiteren Ausführungsform eines erfindungsgemäßen Lagersystems 100' mit davor angeordneter Transportvorrichtung 200, Beschickungs- und/oder Entnahmevorrichtung 300 sowie Lagergutträgern 400 und Lagergütern 500. Im Unterschied zum in den Fig. 3 und Fig. 4 dargestellten Lagersystem 100 besitzt das Lagersystem 100' eine obere Beschickungs- und/oder Entnahmeöffnung 103ₒ und eine untere Beschickungs- und/oder Entnahmeöffnung 103ₗ. Beispielsweise können über die obere Beschickungs- und/oder Entnahmeöffnung 103ₒ ausschließlich, hauptsächlich, vorzugsweise und/oder je nach Bedarf Lagergutträger in das Lagersystem 100' eingelagert werden. Über die untere Beschickungs- und/oder Entnahmeöffnung 103ₗ können Lagergutträger 400 ausschließlich, hauptsächlich, bevorzugt und/oder beliebig aus dem Lagersystem 100' ausgelagert werden. Die beiden Beschickungs- und/oder Entnahmeöffnungen 103ₒ und 103ₗ können auch je nach Bedarf abwechselnd zur Ein- und/oder Auslagerung verwendet werden.

In ihrer in Fig. 5 dargestellten Ausführungsform weist die Transportvorrichtung 200 neben der Transportbahn 201, die wie in den Fig. 3 und 4 dargestellt angeordnet und in Fig. 5 der unteren Beschickungs- und/oder Entnahmeöffnung 103, zugeordnet und deshalb mit 201aₗ bezeichnet ist, eine Transportbahn 201bₗ auf, die einen dem Lagersystem 100' an der Transportvorrichtung 200 gegenüberliegend angeordneten Lagersystem zugeordnete Transportbahn 201bₗ aufweist. Somit kann das dargestellte Lagersystem 100' auch als Lagersystem 100'a bezeichnet werden. Ein dem Lagersystem 100'a an der Transportvorrichtung 200 gegenüberliegend angeordnetes Lagersystem kann als Lagersystem 100'b (nicht gezeigt) bezeichnet werden. Analog ist die der oberen Beschickungs- und/oder Entnahmeöffnung 103ₒ des Lagersystems 100' zugewandte Transportbahn 201 als Transportbahn 201aₒ und die dem Lagersystem 100'b zugewandte obere Transportbahn 201 als Transportbahn 201bₒ bezeichnet.

Die Beschickungs- und/oder Entnahmevorrichtung 300' besitzt zwei Verschiebeeinrichtung 301ₒ, 301ₗ, die jeweils den Beschickungs- und/oder Entnahmeöffnungen 103ₒ bzw. 103ₗ des Lagersystems 100'a und des Lagersystems 100'b zugeordnet sind.

Fig. 6 zeigt das in Fig. 5 dargestellte Lagersystem 100' bzw. 100'a samt Transportvorrichtung 200, Beschickungs- und/oder Entnahmevorrichtung 300', Lagergutträger 400 und Lagergütern 500 in einer schematischen Vorderansicht. Hier wird deutlich, dass vor der oberen Beschickungs- und/oder Entnahmeöffnung 103ₒ des Lagersystems 100'a in einer entsprechenden Transportrichtung T_{a,O} eine Reihe von Lagergutträgern 400aₒ bis 400iₒ mit darauf befindlichen Lagergütern 500aₒ bis 500iₒ jeweiligen Beschickungs- und/oder Entnahmestellen 104aₒ bis 104iₒ zugeordnet angeordnet sind, um in die obere Beschickungs- und/oder Entnahmeöffnung 103ₒ eingelagert zu werden oder kurz nachdem sie aus der Beschickungs- und/oder Entnahmeöffnung 103ₒ ausgelagert wurden. Analog ist vor der unteren Beschickungs- und/oder Entnahmeöffnung 103ₗ eine Reihe von Lagergutträgern 400aₗ bis 400iₗ mit jeweiligen Lagergütern 500aₗ bis 500iₗ den jeweiligen Beschickungs- und/oder Entnahmestellen 104aᵢ bis 104iₗ zugeordnet angeordnet, um in die Beschickungs- und/oder Entnahmeöffnung 103ₗ eingelagert zu werden bzw. nachdem sie aus der Beschickungs- und/oder Entnahmeöffnung 103ₗ ausgelagert wurden.

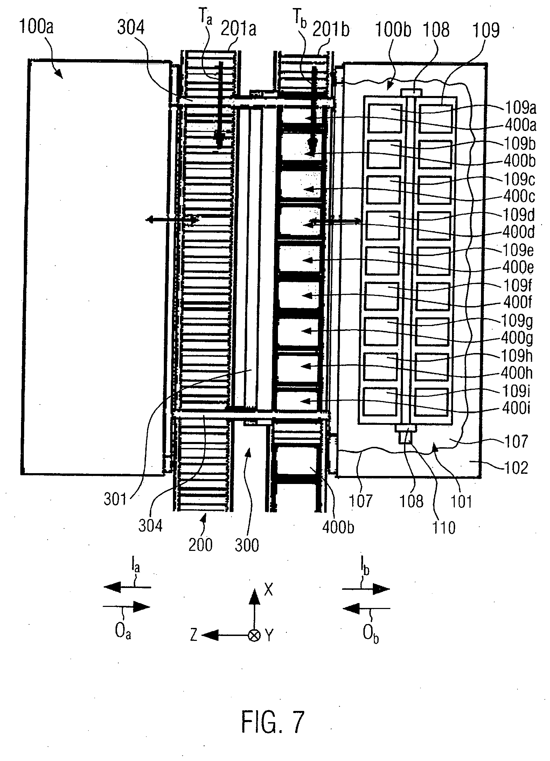

Fig. 7 zeigt zwei sich an einem Abschnitt der Transportvorrichtung 200 quer zu den jeweiligen Transportrichtungen Tₐ bzw. T_{b} gegenüberliegend angeordnete Lagersysteme 100 bzw. 100a, 100b oder 100'a, 100'b in einer schematischen Draufsicht. Den Lagersystemen 100a und 100b ist jeweils eine Transportbahn 201 a bzw. 201 b der Transportvorrichtung 200 zugeordnet. Zwischen den Transportbahnen 201 a, 201 b ist die Verschiebeeinrichtung 301 der Beschickungs- und/oder Entnahmevorrichtung 300 angeordnet. In der Einlagerungsrichtung I_{b} des Lagersystems 100b vor dem selbigen ist eine Reihe von Lagergutträgern 400a bis 400i aufgereiht, die bereit ist, mit Hilfe der Verschiebeeinrichtung 301 in das Lagersystems 100b verschoben zu werden bzw. die zuvor aus dem Lagersystem 100b entnommen wurde.

Das Gehäuse 102 des Lagersystems 100b bzw. die Decke des Lagersystems 100b ist aufgebrochen dargestellt, so dass der vom Gehäuse 102 umgebene Lagerraum 101 einsehbar ist. Hier ist ersichtlich, dass das Lagersystem 100b als Paternoster- bzw. Umlauflager ausgestaltet ist, in dessen Lagerraum 101 Lagerabschnitte 107 motorisch angetrieben entlang einer Umlaufeinrichtung 108 beweglich sind. Somit können Lagergutträger 400a bis 400i auf entsprechend ihnen zugewiesenen Lagerplätzen 109a bis 109i von der Beschickungs- und/oder Entnahmeöffnung 103 weg und zu dieser hin transportiert werden, indem sie auf einer durch die Umlaufeinrichtung 108 vorgegebenen Umlaufbahn innerhalb des Lagerraums 101 bewegt werden. Die Bewegung der Lagerplätze 109a bis 109i kann dabei durch eine Antriebseinrichtung 110 realisiert werden. Die Antriebseinrichtung 110 kann Antriebs-, Steuer- sowie Kommunikationsmittel beinhalten, die den Umlauf der Lagerabschnitte 107 sowie darauf angeordneter bzw. definierter Lagerplätze 109a bis 109i steuern oder regeln sowie einen gezielten Zugriff auf die Lagerplätze 109a bis 109i an der Beschickungs- und/oder Entnahmeöffnung 103 ermöglichen.

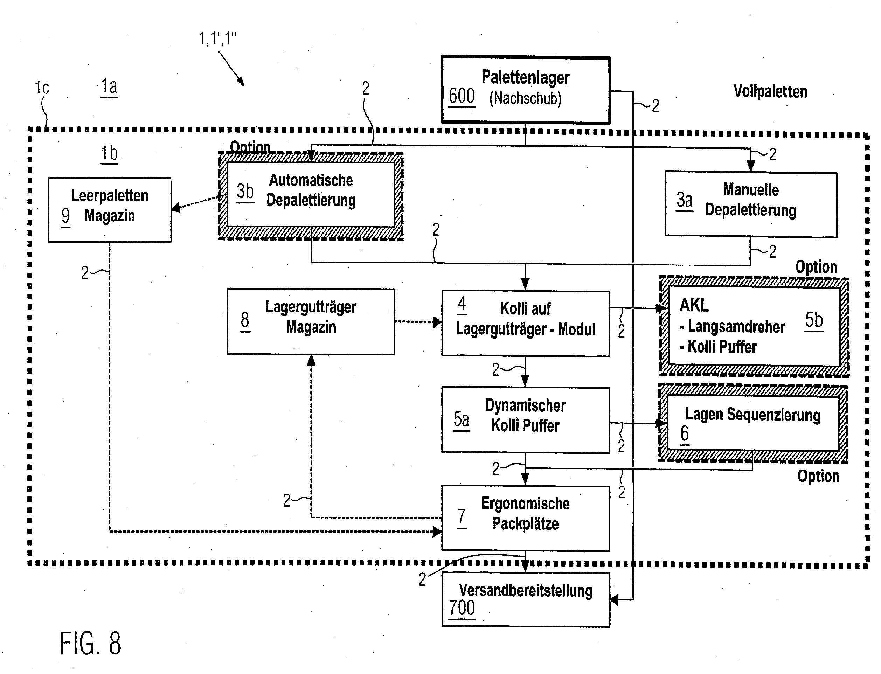

Fig. 8 zeigt ein Blockdiagramm, das einen schematischen Aufbau von Ausführungsformen erfindungsgemäßer Lager 1, 1' und/oder 1" darstellt. Das Lager kann einen Außenbereich 1a, einen Innenbereich 1b und eine den Außenbereich 1a vom Innenbereich 1b trennende Abgrenzung 1 c beinhalten. Das Lager 1, 1', 1" beinhaltet in der Regel ein Palettenlager 600, das zur Annahme und Lagerung von sortenrein auf Paletten angelieferten Artikeln ausgestaltet ist und beispielsweise im Außenbereich 1a angeordnet sein kann. Vom Palettenlager 600 gelangen die Lagergüter 500 sortenrein palettiert zu einer manuellen Depalettierungsstation 3a und/oder automatischen Depalettierungsstation 3b. Zusätzlich können die sortenreinen Paletten direkt zu einer Versandstation 700 gelangen, die zum Versand der Lagergüter 500 an Kunden, Endkunden bzw. Besteller ausgestaltet ist und im Außenbereich 1 a angeordnet sein kann.

In den Depalettierungsstationen 3a, 3b werden die Lagergüter 500 von den Paletten entnommen. Die depalettierten Lagergüter gelangen zu einer Lagergutträgerstation 4, in der die Lagergüter 500 als zu kommissionierende Einheiten bzw. Kollis auf Lagergutträgern 400 abgelegt und der jeweilige Kolli dem Lagergutträger verarbeitungstechnisch zugewiesen wird. Von der Lagergutträgerstation 4 gelangen die Lagergutträger 400 samt darauf befindlichem Lagergut 500 in einen dynamischen Kommissionierabschnitt 5a des Lagers 1, 1', 1". Zusätzlich können die Lagergutträger 400 samt Lagergut 500 in einen weiteren Kommissionierabschnitt 5b gelangen, der als Kommissionierpufferabschnitt 5b ausgestaltet ist. Der Kommissionierpufferabschnitt 5b kann beispielsweise dazu dienen, weniger häufig nachgefragte Lagergüter 500 aufzunehmen, die bei ihrer Aufnahme im Kommissionierabschnitt 5a zu einer allgemeinen Erhöhung von Kommissionierdauern führen könnten. Der Kommissionierpufferabschnitt 5b kann auch zur Aufnahme vorkommissionierter Lagen von Lagergutträgern 400a bis 400i mit entsprechenden Lagergütern 500a bis 500i dienen und/oder sehr häufig bzw. kurzfristig in großen Stückzahlen abgerufene Lagergüter 500 aufzunehmen, deren Aufnahme in der zu erwartenden nachgefragten Stückzahl im Kommissionierabschnitt 5a zu einer Erhöhung der Kommissionierdauer führen könnte.

Aus dem Kommissionierpufferabschnitt 5b können die Lagergutträger 400 mit darauf befindlichem Lagergut 500 in den Kommissionierabschnitt 5a, in einen Sequenzierungsabschnitt 6 oder direkt zu einer Packstation 7 gelangen. In den Sequenzierungsabschnitt 6 können die Lagergutträger 400 mit den Lagergütern 500 auch aus dem Kommissionierabschnitt 5a gelangen. Der Sequenzierungsabschnitt kann beispielsweise dazu dienen, Lagergutträger 400 mit darauf befindlichen Lagergütern 500 in einer gewünschten Palettierungsreihenfolge anzuordnen und/oder in der gewünschten Palettierungsreihenfolge angeordnete Lagergutträger 400 mit Lagergütern 500 zwischenzuspeichern. Aus dem Sequenzierungsabschnitt 6 können die Lagergutträger 400 mit den Lagergütern 500 zur Packstation 7 gelangen.

Die Packstation 7 kann beispielsweise als Palettierungsstation ausgestaltet sein, in der Lagergüter von dem Kommissionierabschnitt 5a, dem Kommissionierpufferabschnitt 5b und/oder dem Sequenzierungsabschnitt 6 auf Lagergutträgern 400 ankommend von diesen entnommen und versandfertig verpackt werden. Ein versandfertiges Verpacken der Lagergüter kann beispielsweise beinhalten, dass die Lagergüter auf Paletten gestapelt und gesichert werden. Aus der Packstation 7 gelangen die Lagergüter 500 in die Versandstation 700, die als eine Art Versandlager ausgestaltet sein kann, in der fertige Kommissionen zur Abholung bereitgestellt sind. Die von den Lagergütern 500 getrennten Lagergutträger 400 können von der Packstation 7 in ein Lagergütträgermagazin 8 gelangen, in welchem Lagergutträger 400 zwischengelagert und bereitgestellt werden können. Zur Bereitstellung der Paletten für das Verpacken in der Packstation 7 kann ein Leerpalettenmagazin 9 dienen. In das Leerpalettenmagazin 9 können die von den eingegangenen Lagergütern in der manuellen Depalettierungsstation 3a und der automatischen Depalettierungsstation 3b getrennten Paletten gelangen. Das Leerpalettenmagazin 9 stellt die Paletten für eine Palettierung in der Packstation 7 bereit.

Die manuelle Depalettierungsstation 3a, die automatische Depalettierungsstation 3b, die Lagergutträgerstation 4, der Kommissionierabschnitt 5a, der Kommissionierpufferabschnitt 5b, der Sequenzierungsabschnitt 6, die Packstation 7, das Lagergutträgermagazin 8, das Leerpalettenmagazin 9, das Palettenlager 600 und/oder die Versandstation 700 sind über das Transportsystem 2 des Lagers 1, 1', 1" miteinander verbunden. Das Transportsystem 2 kann Transportvorrichtungen 200, weitere Transportvorrichtungen 200', umlaufende Transportvorrichtungen 200" sowie beliebige weitere Transporteinrichtungen und Fördereinrichtungen beinhalten, um die Lagergüter 500, Lagergutträger 400 und/oder Paletten 601 (hier noch nicht gezeigt) in beliebiger Menge und Reihenfolge hin und her zu transportieren. Der Kommissionierabschnitt 5a, der Kommissionierpufferabschnitt 5b, der Sequenzierungsabschnitt 6, das Lagergutträgermagazin 8 und das Leerpalettenmagazin 9 können eine beliebige Anzahl von Lagersystemen 100, 100', 100a, 100b, 100a', 100b' beinhalten, um Lagergüter 500, Lagergutträger 400 und/oder Paletten 601 in gewünschter Anzahl und Anordnung zu lagern, puffern und zwischenzuspeichern.

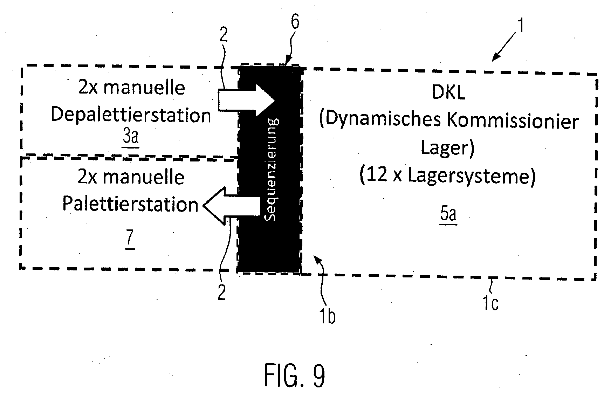

Fig. 9 zeigt einen schematischen Aufbau einer ersten Ausführungsform eines erfindungsgemäßen Lagers 1. Das Lager 1 kann in seinem Innenbereich 1 b beispielsweise zwei manuelle Depalettierungsstationen 3a aufweisen, von denen aus Lagergüter 500 über das Transportsystem 2 in den Sequenzierungsabschnitt 6 gelangen, der mit dem Kommissionierabschnitt 5a verbunden ist bzw. in diesen übergehen kann. Aus dem Kommissionierabschnitt 5a und dem Sequenzierungsabschnitt 6 gelangen die kommissionierten Lagergüter 500 auf Lagergutträgern 400 zu zwei manuellen Packstationen, in denen die Lagergüter 500 von den Lagergutträgern getrennt und auf Paletten 601 versandfertig verpackt werden.

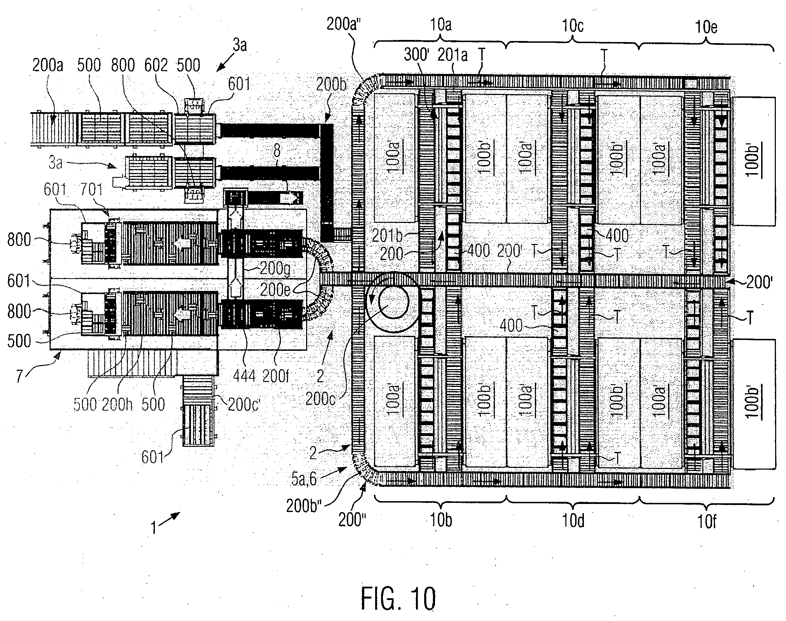

Fig. 10 ist eine schematische Draufsicht auf das Lager 1. Hier ist zu erkennen, dass der Kommissionierungsabschnitt 5a und der Sequenzierungsabschnitt 6 in einem zwölf Lagersysteme 100 umfassenden Block zusammengefasst sind. Die Lagersysteme 100 sind je in Lagerabschnitte bzw. Cluster 10 eingeteilt. Somit ergeben sich sechs Lagerabschnitte 10a bis 10f. Jeder der Lagerabschnitte 10a bis 10f umfasst zwei Lagersysteme 100a' und 100b', die sich an einer Transportvorrichtung 200 gegenüberliegend angeordnet sind, wobei die Transportvorrichtung 200 zwei den jeweiligen Lagersystemen 100a', 100b' zugeordnete Transportbahnen 201 a bzw. 201 b und eine zwischen den Transportbahnen angeordnete Beschickungs- und/oder Entnahmevorrichtung 300' aufweist. Die Transportrichtung T der Transportvorrichtungen 200 verläuft jeweils in Richtung zu der weiteren Transportvorrichtung 200' hin, die als zentrale Achse das Lager 1 durchläuft. Die umlaufende Transportvorrichtung 200" umläuft in zwei Abschnitten 200a" und 200b" zumindest abschnittsweise die Lagerabschnitte 10a, 10c, 10e, bzw. 10b, 10d, 10f.

An der doppelten manuellen Depalettierungsstation 3a sind zwei Transporteinrichtungen 200a vorgesehen, auf denen sortenreine Paletten 601 mit darauf befindlichen Lagergütern 500 zu zwei Depalettierungsplätzen 602 transportiert werden, an denen jeweils eine Bedienperson 800 die Paletten depalettiert. Die von den Paletten depalettierten Lagergüter 500 werden auf einer Transporteinrichtung 200b in Form eines Förderbandes in Richtung der umlaufenden Transportvorrichtung 200" befördert, auf welcher sie dann zu den Transportvorrichtungen 200 gelangen, die den jeweiligen Lagerabschnitten 10a bis 10f zugeordnet sind.

Beispielsweise können die beiden Lagersysteme 100a' in den Lagerabschnitten 10a und 10b als Sequenzierungsabschnitt 6 verwendet werden, in welchem Lagergutträger 400 mit darauf befindlichen Lagergütern 500 in einer gewünschten Reihenfolge angeordnet werden. Dementsprechend ist in diesem Abschnitt in einem Bereich zwischen der weiteren Transportvorrichtung 200', der Transportvorrichtung 200 des Lagerabschnitts 10b sowie dessen Lagersystems 100a' und dem Abschnitt 200b" der Transportvorrichtung 200" eine weitere Transporteinrichtung 200c in Form eines Spiralförderers vorgesehen. Die Transportvorrichtung 200c ermöglicht es, auf übereinander liegenden Ebenen bzw. zusätzlichen Transportvorrichtungen der Transportvorrichtung 200, weiteren Transportvorrichtung 200' und umlaufenden Transportvorrichtung 200" befindliche Lagergutträger 400 mit und/oder ohne darauf befindlichen Waren 500 von einer Ebene auf die darüber- bzw. darunterliegende Ebene zu befördern und die gesamte Aneinanderreihung der Lagergutträger 400 zu beeinflussen.

Sobald in einer gewünschten Reihenfolge auf der weiteren Transportvorrichtung 200' aufgereiht, gelangen die Lagergutträger 400 samt darauf befindlichen Lagergütern 500 über zwei weitere Transporteinrichtungen 200e, die als Abzweigungen von der weiteren Transportvorrichten 200' ausgestaltet sind, zu den beispielsweise zwei Packstationen 7. In den Packstationen 7 ist jeweils eine Lagergutabtrenneinrichtung 444 vorgesehen, auf der die Lagergutträger 400 von den Lagergütern 500 abgetrennt bzw. die Lagergüter 500 von den Lagergutträgern 400 abgehoben werden. Über eine weitere, als Förderbahn oder Rollenbahn ausgestaltete Transporteinrichtung 200g gelangen die Lagergutträger dann beispielsweise zum Lagergutträgermagazin 8. Von den Lagergutträgerabtrenneinrichtungen 444 gelangen die Lagergüter 500 in einer gewünschten Kommissionierreihenfolge zu Packplätzen 701, an denen die Lagergutträger 500 jeweils von einer Bedienperson 800 auf Paletten 601 versandfertig gestapelt werden.

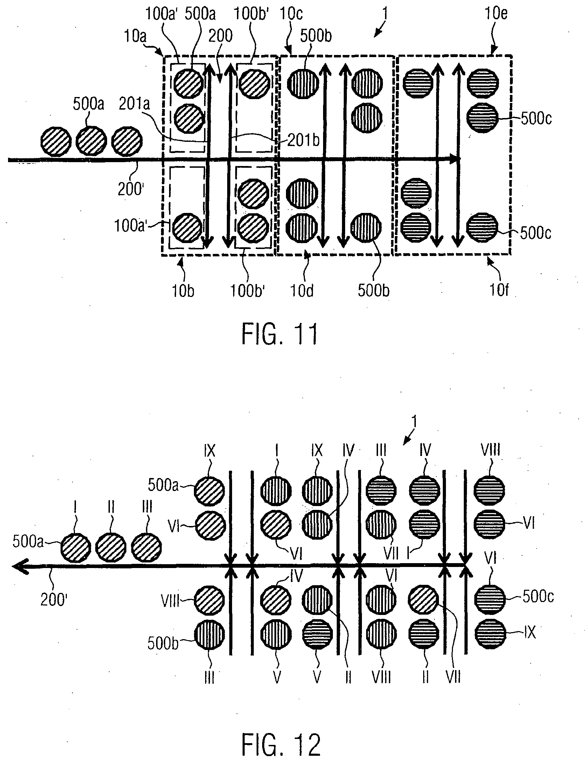

Fig. 11 zeigt ein Einlagerungsschema, gemäß dem verschiedene Lagergüter 500a bis 500c beispielsweise auf die verschiedenen Lagerabschnitte 10a bis 10f verteilt werden können. So können die Lagergüter 500a beispielsweise sortenrein von der manuellen Depalettierungsstation und/oder automatischen Depalettierungsstation 3a, 3b auf Lagergutträgern 400 über die weitere Transportvorrichtung 200' zu den jeweiligen Transportvorrichtungen 200 der Lagerabschnitte 10a bis 10f transportiert werden. Folglich sind hier die Transportrichtungen T der Transportvorrichtungen 200 und weiteren Transportvorrichtung 200' jeweils umgekehrt zu der in Fig. 10 eingezeichneten Transportrichtung T. Es ist zu erkennen, dass gleiche Lagergüter 500a bis 500e auf verschiedene Lagerabschnitte 10a, 10b bzw. 10c, 10d bzw. 10e, 10f aufgeteilt werden.

Fig. 12 zeigt ein mögliches Auslagerungsschema aus dem in Fig. 9 bis 11 gezeigten Lager. So sind in Fig. 12 die Lagergüter 500a bis 500c mit Sequenzierungsnummern I bis IX versehen. Die Sequenzierungsnummern I bis IX entsprechen einer gewünschten Verpackungsreihenfolge der Lagergüter 500a bis 500c in der Packstation 7. So befinden sich drei Lagergüter 500a auf der weiteren Transportvorrichtung 200' auf dem Weg zur Packstation 7 hin. In den Lagersystemen 10a bis 10f sind die Lagergüter 500a bis 500c derart verteilt eingelagert, dass sie bei einer parallelen Auslagerung aus den Lagerabschnitten 10a bis 10f gleichzeitig bzw. in einer gewünschten Abfolge und daher Sequenzierung über die Transportvorrichtungen 200 zur weiteren Transportvorrichtung 200' gelangen, auf welcher die eigentliche Packsequenz in der gewünschten Packreihenfolge angeordnet wird.

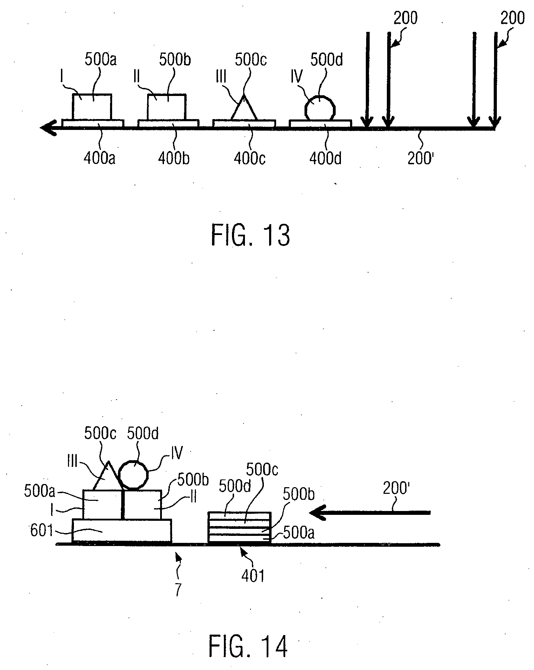

Fig. 13 ist eine schematische Darstellung einer Packsequenz von Lagergütern 500a bis 500d, denen die Sequenznummern I bis VI zugeordnet sind, auf entsprechenden Lagergütern 400a bis 400d, die sich auf der weiteren Transportvorrichtung 200' auf dem Weg zur Packstation 7 befinden. Es ist zu erkennen, dass die Lagergüter 500a und 500b quaderförmige Abmaße haben. Das Lagergut 500c hat eine dreieckige bzw. beispielsweise pyramidale Form. Das Lagergut 500d ist beispielsweise sphärisch geformt.

Fig. 14 zeigt schematisch, wie die Lagergüter 500a bis 500d in der gewünschten Packreihenfolge gemäß ihrer Sequenznummern I bis IV auf einer der Paletten 601 angeordnet sind, nachdem sie über die weitere Transportvorrichtung 200' zur Lagergutträgerabtrenneinrichtung 444 gelangt sind, dort von den entsprechenden Lagergutträgern 500a bis 500d getrennt und anschließend verpackt wurden. Es ist zu erkennen, dass die Art der Lagergüter 500a bis 500d erfordern, dass die Lagergüter 500a und 500b weiter unten bzw. zuunterst auf der Palette 601 abzulegen sind, um die Lagergüter 500c und 500d stabil auf den Lagergütern 500a bzw. 500b ablegen zu können und aus den Lagergütern 500a bis 500d auf der Palette 601 eine sicherbare Versandeinheit zusammenzustellen.

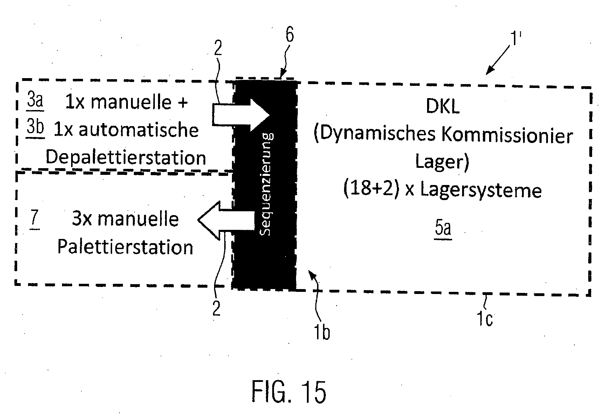

Fig. 15 zeigt einen schematischen Aufbau einer weiteren Ausführungsform eines erfindungsgemäßen Lagers 1'. Das Lager 1' umfasst sowohl eine manuelle Depalettierungsstation 3a als auch eine automatische Depalettierungsstation 3b. Des Weiteren umfasst das Lager 1' einen Sequenzierungsabschnitt 6 und einen Kommissionierabschnitt 5a. Schließlich verfügt das Lager 1' über drei manuelle Palettier- bzw. Packstationen 7.

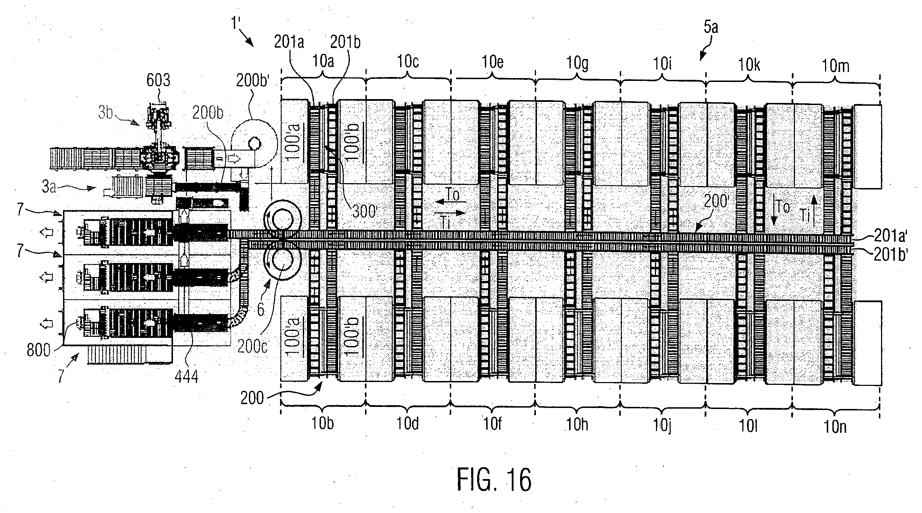

Fig. 16 zeigt das Lager 1' in einer schematischen Draufsicht. Hier ist zu erkennen, dass das Lager 1' Lagerabschnitte 10a bis 10h umfasst, die jeweils über Lagersysteme 100'a und 100'b verfügen, zwischen denen Transportvorrichtungen 200 mit jeweils zwei Transportbahnen 201 a bzw. 201 b angeordnet sind. Zwischen den Transportbahnen 201 a und 201 b ist jeweils eine Beschickungs- und/oder Entnahmevorrichtung 300' angeordnet. Im Gegensatz zum Lager 1, ist beim Lager 1' keine umlaufende Transportvorrichtung 200" vorgesehen. Jedoch verfügt die weitere Transportvorrichtung 200' über zwei Transportbahnen 201 a' und 201b'. Jede der Transportbahnen 201a, 201 b und 201 a', 201 b' kann über eine zusätzliche darüber- bzw. darunterliegende Transportbahn verfügen, die in Fig. 16 nicht ersichtlich ist. Des Weiteren ist erkennbar, dass zum Austausch von Lagergutträgern zwischen den Transportbahnen 201 a' und 201 b' sowie ihren jeweiligen zusätzlichen Transportbahnen zwei Spiralförderer 200c vorgesehen sind, die jeweils der Transportbahn 201 a' bzw. 201 b' zugeordnet sind.

Das Lager 1' ermöglicht es, Lagergutträger 500 in der manuellen Depalettierungsstation 3a und der automatischen Depalettierungsstation 3b von den Paletten 601 zu trennen, wobei in der automatischen Depalettierungsstation 3b ein Depalettierungsroboter 603 die Depalettierung übernimmt. Über die weitere Transportvorrichtung 200b bzw. eine als Spiralförderer ausgestaltete zusätzliche weitere Transporteinrichtung 200b' gelangen die Lagergüter 500 sortenrein von der Depalettierungsstation 300a bzw. Depalettierungsstation 300b auf die weitere Transportvorrichtung 200', von der aus sie über die Transportvorrichtungen 200 der jeweiligen Lagerabschnitte 10a bis 10n in die Lagerabschnitte 10a bis 10n befördert werden. Aus den Lagerabschnitten 10a bis 10n gelangen die Lagergüter 500 auf den Lagergutträgern 400 dann zu den drei Packstationen 7, in denen sie jeweils von Bedienpersonen 800, die auch schon unter Bezug auf Figs. 10, 13 und 14 beschrieben, auf Paletten 601 verpackt werden.

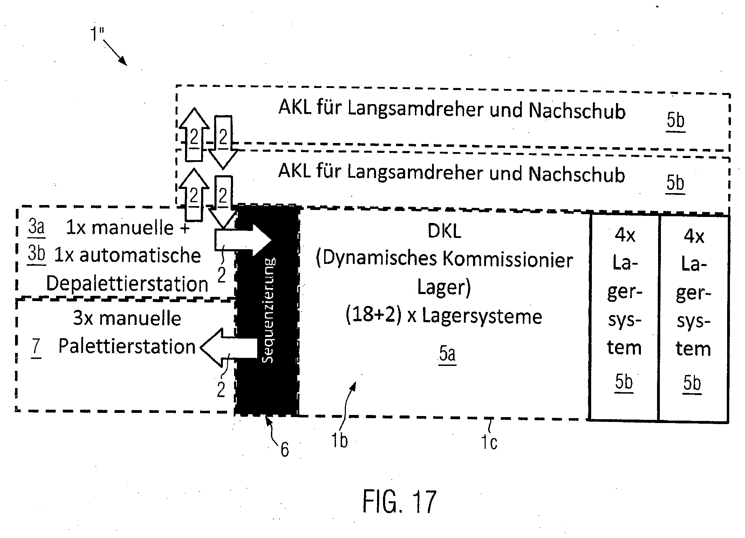

Fig. 17 zeigt eine weitere Ausführungsform bzw. Aufbaustufe eines erfindungsgemäßen Lagers 1". Das Lager 1" verfügt neben einer der manuellen Depalettierungsstationen 3a, einer der automatischen Depalettierungsstationen 3b, dem Sequenzierungsabschnitt 6 sowie drei der Palettierungsstationen 7 über zwei mittels des Transportsystems 2 an die Depalettierungsstationen 3a und 3b angebundene Kommissionierpufferabschnitte 5b für langsam drehende Lagergüter und Nachschub. Des Weiteren sind zwei zusätzliche Kommissionierpufferabschnitte 5b an den Kommissionierabschnitt 5a angebunden.

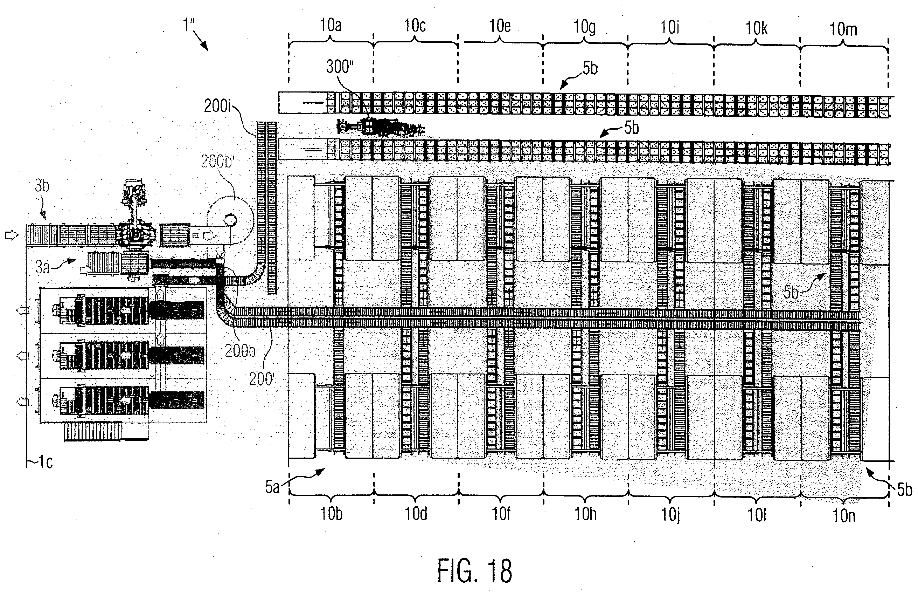

Fig. 18 zeigt das Lager 1" in einer schematischen Draufsicht. Wie beim Lager 1' sind im Lager 1" beispielsweise 14 Lagerabschnitte 10a bis 10n vorgesehen. Die Lagerabschnitte 10m und 10n können beispielsweise als die dem Kommissionierabschnitt 5a zugeordneten Kommissionierpufferabschnitte 5b verwendet werden. Zwei weitere Kommissionierpufferabschnitte 5b erstrecken sich über die gesamte Länge des Lagers 1 und werden mit Hilfe einer Beschickungs- und/oder Entnahmevorrichtung 300" bedient, die als Beschickungs- und/oder Entnahme- bzw. Lagerroboter ausgestaltet ist. Die Beschickungs- und/oder Entnahmevorrichtung 300" verkehrt zwischen den als Bahnen mit Abschnitten sortenreiner Güter ausgestalteten Kommissionierpufferabschnitten 5b und kann Lagergüter zu einer weiteren Transporteinrichtung 200e in Form von zumindest abschnittsweise nebeneinander parallel zueinander verlaufenden Transportbahnen befördern, die dazu ausgestaltet sind, Lagergüter 500 von der manuellen Depalettierungsstation 3a und der automatischen Depalettierungsstation 3b in die Kommissionierpufferabschnitte 5b und aus diesen zur weiteren Transportvorrichtung 200' zu befördern, über welche die Lagergüter 500 zu den Lagerabschnitten 10a bis 10n sowie von diesen weg transportiert werden können.

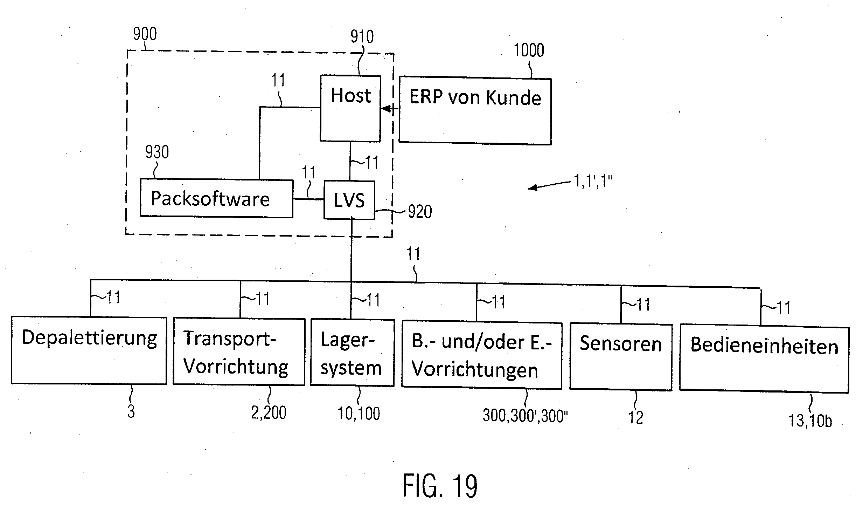

Fig. 19 zeigt ein mögliches Lagerverwaltungsschema für eine Ausführungsform eines erfindungsgemäßen Lagers 1, 1', 1". So kann ein Bestellvorgang mit einer Kundenbestellung bzw. einem Auftrag 1000 beginnen, der manuell und/oder automatisch in ein Lagersteuerungssystem 900 eingegeben werden kann. Der Auftrag 1000 kann beispielsweise von einem elektronischen Warenmanagement System (ERP - Electronic Resource Planning) zusammengestellt und übermittelt sein. Das Lagersteuerungssystem 900 kann eine elektronische Datenverarbeitungseinrichtung, wie einen Computer 910, ein Lagerverwaltungssystem 920 und ein Computerprogrammprodukt 930 beinhalten. Das Lagersteuerungssystem 900 kann über eine elektronische Kommunikationseinrichtung 11 mit den Depalettierungsstationen 3, dem Transportsystem 2 bzw. den Transportvorrichtungen 200, den Lagerabschnitten 10 bzw. Lagersystemen 100, den Beschickungs- und/oder Entnahmevorrichtungen 300 bis 300", einer Sensorik 12, umfassend eine Vielzahl von Sensoren, sowie Bedieneinheiten 13 und Bedieneinrichtungen 106 verbunden sein.

Der Auftrag 1000 kann vom Computer bzw. am Computer 910 bearbeitet und nach Auftragsbestätigung an das Lagerverwaltungssystem 920 weitergegeben werden, das mit Hilfe des Computerprogrammprodukts 930 festlegt, zu welchem Zeitpunkt die im Rahmen des Auftrags angeforderten Lagergüter 500 in einer bestimmten Sequenzierung an eine der Packstationen 7 vorliegen müssen, damit sie termingerecht an der Versandstation 700 zum Versand an den Kunden bereitstehen. Zur Ermittlung dieser Bereitstellungsanforderung kann der Computer 910, das Lagerverwaltungssystem 920 und das Computerprogrammprodukt 930 über die Kommunikationseinrichtung 11 elektronisch Informationen austauschen. Von dem Lagerverwaltungssystem 920 wird dann über die Kommunikationseinrichtung 11 Kontakt mit den Depalettierungsstationen 3, dem Transportsystem bzw. den Transportvorrichtungen 2, 200, den Lagerabschnitten 10, Lagersystem 100, Beschickungs- und/oder Entnahmevorrichtungen 300, 300', 300", Sensoren 12 und ggf. Bedieneinheiten 13 und Bedieneinrichtungen 106 aufgenommen, um kürzestmöglich Kommissionierdauern zu ermitteln.

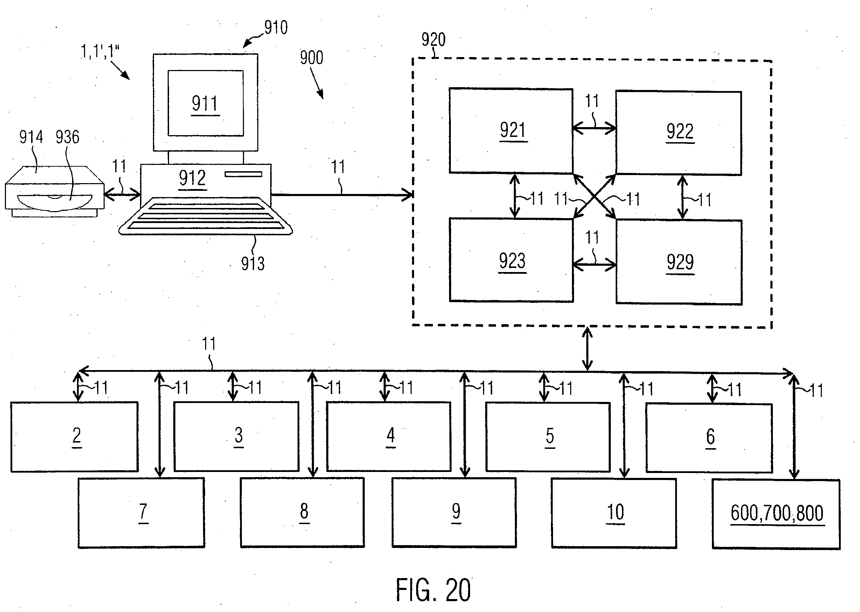

Fig. 20 zeigt eine schematische Darstellung des Lagersystems 1, 1', 1". Hier ist ersichtlich, dass der Computer 910 eine optische Ausgabeeinrichtung 911 aufweist, die mehrere Bildschirme und Drucker umfassen kann. Des Weiteren umfasst der Computer 900 eine Recheneinheit 912 sowie eine Bedieneinheit 913. Die Recheneinheit 912 ist über eine der Kommunikationseinrichtungen 11 mit einer Lese- und/oder Schreibeinheit 914 verbunden, die ausgestaltet ist, von dem Computerprogrammprodukt 930 zur Ausführung durch den Computer 910 konfigurierte Anweisungen auszulesen und darauf zu schreiben. Über eine der Kommunikationseinrichtungen 11 ist der Computer 910 mit dem Lagerverwaltungssystem 920 verbunden. Das Lagerverwaltungssystem 920 umfasst ein Kommissionierungsreihenfolgemodul 921 bzw. Sequenzierer, der gewünschte Palettierungsreihenfolgen bzw. Sequenzen von Lagergütern 500 ermittelt, ein Lagerbeständeerfassungsmodul 922, das die Bestände und die Verteilung der Lagergüter 500 auf die Lagersysteme 100 des Lagers bzw. die verschiedenen Kommissionierabschnitte 5 ermittelt.

Des Weiteren umfasst das Lagerverwaltungssystem 920 ein Transportwegeermittlungsmodul 923, das ausgestaltet ist, entsprechend der jeweiligen Lagerbestände, die zur Bereitstellung einer wie gewünscht sequenzierten Kommission an den Packstationen 700 zur Verfügung stehenden Abschnitte des Transportsystems 2 und der sich daraus ergebenden Transportzeiten innerhalb des Lagers 1, 1', 1" zu berechnen. Darüber hinaus umfasst das Lagerverwaltungssystem 920 ein Kommissionierdauerberechnungsmodul 924, das anhand der Lagerbestände und Transportwege ermittelt, welche gesamten Kommissionierdauern innerhalb des Lagers 1, 1', 1" sich für über verschiedene Lagerabschnitte 10 und Abschnitte des Transportsystems 2 zusammengestellte Kommissionen ergeben.

Zur Ermittlung der erforderlichen Informationen über die Lagerbestände, Transportwege und Kommissionierzeiten ist das Lagerverwaltungssystem 920 über die Kommunikationseinrichtung 11 mit dem Transportsystem 2, den Depalettierungsstationen 3, den Lagergutträgerstationen 4, dem Kommissionierabschnitt 5, den Sequenzierungsabschnitten 6, den Packstationen 7, den Lagergutträgermagazinen 8, den Leerpalettenmagazinen 9, den Lagerabschnitten 10 sowie den Palettenlagern 600, Versandstationen 700 und ggf. Bedienpersonen 800 verbunden bzw. steht mit diesen über Bedieneinheiten 13 und/oder Bedieneinrichtungen 106 in Kontakt.

Im Rahmen des Erfindungsgedankens sind Abweichungen von den oben beschriebenen Ausführungsformen möglich. So kann ein erfindungsgemäßes Lager 1, 1', 1" den jeweiligen Anforderungen gemäß beliebig in einen Außenbereich 1a und einen Innenbereich 1b unterteilt sein, die durch eine Abgrenzung 1c voneinander getrennt sein können. Das Lager 1, 1', 1" kann den jeweiligen Anforderungen gemäß über ein Transportsystem 2, manuelle Depalettierungsstationen 3, 3a, 3b, Lagergutträgerstationen 4, Kommissionierabschnitte 5, 5a, 5b, Sequenzierungsabschnitte 6, Palettierungs- bzw. Packstationen 7, Lagergutträgermagazine 8, Leerpalettenmagazine 9, Lagerabschnitte 10, 10a bis 10n, Kommunikationseinrichtungen 11, Sensorik 12 und Bedieneinheiten 13 verfügen, um den jeweiligen Anforderungen gemäß Lagergüter 500 weitestgehend sortenrein anzunehmen und kommissioniert abzugeben. Die Größe und der Aufbau des Lagers richten sich dabei nach dem gewünschten Warenumschlag bwz. -durchsatz sowie der Vielfalt des zu kommissionierenden Sortiments.

Die Depalettierungsstationen 3, 3a, 3b können den jeweiligen Anforderungen gemäß aufgebaut sein, um Lagergüter bzw. Stückgutartikel oder Kollis 500 von Paletten 601 zu entnehmen. Dazu können die Depalettierungsstationen 3, 3a, 3b den jeweiligen Anforderungen gemäßen Depalettierungsplätze 602 und Depalettierungsroboter 603 aufweisen. Ebenso können Lagergutträgerstationen 4 den jeweiligen Anforderungen gemäß ausgestaltet sein, um Waren bzw. Lagergut 500 auf den Lagergutträgern 400, 400a bis 400i abzulegen und diesen zuzuweisen. Eine Lagergutabtrenneinrichtung 444 kann dementsprechend den jeweiligen Anforderungen gemäß ausgestaltet sein, um die Lagergüter 500 von den Lagergutträgern 400 zu entnehmen.

Der Kommissionierabschnitt 5 bzw. Kommissionierabschnitt 5a und Kommissionierpufferabschnitt 5b und der Sequenzierungsabschnitt 6 können den jeweiligen Anforderungen gemäß Lagersysteme 100, 100', 100a, 100b, 100'a, 100'b beinhalten, die den jeweiligen Anforderungen gemäß ausgestaltet sein können. Die Lagersysteme 100, 100', 100a, 100b, 100'a, 100'b können den jeweiligen Anforderungen gemäß in Lagerabschnitte bzw. Cluster 10, 10a bis 10n unterteilt werden, um Waren darin beispielsweise mehrfach abgelegt gleichzeitig zugänglich anzuordnen. Die Packstation 7, das Lagergutträgermagazin 8 und das Leerpalettenmagazin 9 können den jeweiligen Anforderungen gemäß ausgestaltet sein, damit Bedienpersonen 800 dort möglichst ergonomisch Waren verpacken bzw. auf Paletten 601 anordnen können.

Die Lagersysteme 100 können mit den jeweiligen Anforderungen gemäß ausgestalteten und dimensionierten Lagerräumen 101 versehen sein, die in Gehäusen 102 aufgenommen sein können. Die Beschickungs- und/oder Entnahmeöffnungen 103 der Lagersysteme 100 können den jeweiligen Anforderungen gemäß mit beliebig vielen Beschickungs- und/oder Entnahmestellen 104 versehen und mit Türelementen 105 verschließbar ausgestaltet sein. Es ist auch denkbar, dass ein Lagersystem 100 mehrere übereinander angeordnete Beschickungs- und/oder Entnahmeöffnungen 103 aufweist. So können beispielsweise zwei Beschickungs- und/oder Entnahmeöffnungen 103 übereinander angeordnet sein, um über diese möglichst gleichzeitig oder kurz aufeinander folgend Lagergutträger 400 ein- und auslagern zu können. Die Bedieneinrichtung 106 eines jeden Lagersystems 100 kann den jeweiligen Anforderungen gemäß ausgestaltet sein, um durch eine Bedienperson (nicht gezeigt) oder automatisiert das Lagersystem 100 zu steuern. Die Lagerabschnitte 107 sind im Lagersystem 100 beliebig anordenbar. Die Anordnung der Lagerabschnitte 107, wie hierin gezeigt, an einer Umlaufeinrichtung 108 hat den Vorteil, dass eine Reihe von Lagerplätzen 119a bis 119i gleichzeitig zur Beschickungs- und/oder Entnahmeöffnung 103 befördert werden und dort durch die Beschickungs- und/oder Entnahmevorrichtung 300 bedient werden kann. Dementsprechend können Antriebseinrichtungen 110 des Lagersystems beliebig ausgestaltet sein, um den jeweiligen Anforderungen gerecht zu werden.

Das Transportsystem 2 kann den jeweiligen Anforderungen gemäß Transportvorrichtungen 200, weitere Transportvorrichtungen 200', umlaufende Transportvorrichtungen 200", Transportbahnen 201, 201 a, 201 b, 201ₒ, 201, sowie Transporteinrichtungen 200a bis 200i aufweisen, um die Abschnitte und Elemente des Lagers den jeweiligen Anforderungen gemäß untereinander zu verbinden und Lagergutträger 400 bzw. Lagergut 500 zwischen den Abschnitten und Elementen des Lagers 1, 1', 1" hin und her zu befördern. Die Transportvorrichtungen 200 können den jeweiligen Anforderungen gemäß beliebig ausgestaltete Transportbahnen 201 a und 201 b aufweisen, die aufgeständert sein können, wie hierin durch die Ständer 202 verdeutlicht. Die Transportvorrichtungen 200 können beliebig viele den jeweiligen Anforderungen gemäß ausgestaltete Transfereinrichturigen 203 aufweisen, um Lagergutträger 400 zwischen den Transportbahnen 201 a und 201 b auszutauschen oder zwischen zu lagern, insbesondere damit die Lagergutträger 400 in einer gewünschten Reihenfolge entsprechend der Lagerplätze 119a bis 119f ein- bzw. ausgelagert werden können. Die Transportvorrichtung 200 bzw. deren Transportbahnen 201 a und 201 b können den jeweiligen Anforderungen gemäß motorisch angetrieben und elektronisch gesteuert sein. Es ist auch möglich, dass die Transportbahnen 201a und 201 b zumindest abschnittsweise als Staurollenbahnen passiv ausgestaltet sind.

Die Beschickungs- und/oder Entnahmevorrichtung 300 kann mit den jeweiligen Anforderungen gemäß ausgestalteten Verschiebeeinrichtungen 301 versehen sein, die sowohl in und entgegen der Höhenrichtung Y als auch in ihrer jeweiligen Einlagerungsrichtung I und Auslagerungsrichtung O bzw. Iₐ, I_{b}, Oₐ, O_{b} bewegliche Verschiebeachsen 302a und 302b mit einer den jeweiligen Anforderungen gemäß wählbaren Anzahl daran befestigter Verschiebeorgane 308 aufweisen kann. Zur Beweglichkeit der Verschiebeeinrichtung 301 bzw. der Verschiebeachsen 302a und 302b können die Aufhängungen 303 den jeweiligen Anforderungen gemäß auf den Schienen 304 in der Einlagerungsrichtung I und Auslagerungsrichtung O verfahrbar ausgestaltet sein. So ist es beispielsweise denkbar, dass an den Endabschnitten der Achsen 306 jeweils Zahnräder sitzen und die Schienen 304 zumindest abschnittsweise als Zahnstangen ausgestaltet sind, um präzise die Aufhängungen 303 mit den daran befestigten Verschiebeachsen 302a und 302b in der Einlagerungsrichtung I und Auslagerungsrichtung O zu verfahren. Die Aufhängungen 303 oder die gesamten Verschiebeeinrichtungen 301 können selber bzw. auf einen in Fig. 1 gezeigten Ständerwerk 321 in sowie entgegen der Höhenrichtung Y verfahrbar angebracht bzw. ausgestaltet sein, um die Verschiebehöhe H den jeweiligen Anforderungen gemäß auf eine Höhe einer Transportbahn 201a, 201b bzw. der darauf angeordneten Lagergutträger 400 zu verfahren, damit die Lagergutträger 400 in die auf der jeweiligen Höhe angeordnete Beschickungs- und/oder Entnahmeöffnung 103 eingeschoben oder aus dieser herausgezogen werden können. Stabilisierungselemente 309 können den jeweiligen Anforderungen gemäß vorgesehen sein, um die Stabilität der Beschickungs- und/oder Entnahmevorrichtung 300 zu erhöhen.

Die Verschiebeorgane 308 können den jeweiligen Anforderungen gemäß mit einer beliebigen Anzahl von Verschiebeelementen 310 versehen sein. Die Auswahl von zwei Verschiebeelementen pro Verschiebeorgan 308 erweist sich als Vorteil, um in der Verschiebeebene P definierte Zug- bzw. Druckkräfte auf die Lagergutträger 400 auszuüben. Die Montageprofile 311 können den jeweiligen Anforderungen gemäß mit Stirnseiten 312, Oberseiten 313 und Montageelementen 314 ausgestattet sein, um die Verschiebeelemente 310 zu tragen und die Verschiebeorgane 308 an den Verschiebeachsen 302a, 302b zu befestigen.

Die Verschiebeelemente 315 können den jeweiligen Anforderungen gemäß ausgestaltete Grundplatten 312 aufweisen, die über Dämpfungselemente 317 in Auslagerungsrichtung O auf den Montageprofilen 311 elastisch abgestützt sein können. Dementsprechend können die Befestigungselemente 315 den jeweiligen Anforderungen gemäß ausgewählt sein. Die Verschiebekörper 318 können den jeweiligen Anforderungen gemäß ausgeformt und mit Verschiebekörpern 318 und Zugelementen 319 ausgestattet sein. Die Sensorik 320 ist den jeweiligen Anforderungen gemäß wählbar, um mit einem Lagergutträger 400 bzw. einem daran angebrachten Identifikationselement zusammen zu wirken, das beispielsweise in das Handhabungselement 404 integriert sein kann.

Die Lagergutträger 400 können den jeweiligen Anforderungen gemäß eine Aufnahmefläche 401, die von einem Rand 402 umgeben sein kann. Es ist von Vorteil, an den Stirnseiten 403 und/oder seitlich der Lagergutträger 400 Handhabungselemente 404 vorzusehen, damit die Lagergutträger 400 mit den Verschiebeorganen 308 zusammen wirken können.

Das Lagersteuerungssystem 900 kann den jeweiligen Anforderungen gemäß mit einer beliebigen Anzahl und Ausgestaltungsform von Computern 910, Lagerverwaltungssystemen 920, Computerprogrammprodukten bzw. Datenträgern oder Datenspeichermedien 930, Ausgabeeinrichtungen 911, Recheneinheiten 912, Bedieneinheiten 913, Lese-/Schreibeinheiten 914, Kommissionierungsreihenfolgemodulen 921, Lagerbeständeerfassungsmodulen 922, Transportwegeermittlungsmodulen 923 und Kommissionierdauerberechnungsmodulen 924 versehen sein, die den jeweiligen Anforderungen gemäß mit den oben erwähnten Elemente und Abschnitten des Lagers über Kommunikationseinrichtungen 11 verbunden sein, um auf Sensoriken 12 und Bedieneinheiten 13 zugreifen können. Die Kommunikationseinrichtung 11 kann eine beliebige Art digitaler und/oder analoger Übertragungsmittel, wie beispielsweise Bussysteme, drahtlose und/oder drahtgebundene Kommunikationsmittel sowie Netzwerke und Leitungen beinhalten, um Informationen, Messwerte und sonstige Daten auszutauschen, die zum Betrieb des Lagersteuerungssystems 900 und somit des Lagers 1, 1', 1" als mittels elektronischer Datenverarbeitung gesteuert notwendig sein können.

Die Transportrichtung T kann den Anforderungen gemäß umgekehrt und geändert werden, wie es der jeweilige Ein- und/oder Auslagerungsvorgang erfordert. Auf eine Einlagerungsrichtung I, Iₐ, I_{b} bezogene Elemente und Bezugszeichen sind im Allgemeinen mit einem I indiziert. Auf eine Auslagerungsrichtung O, Oₐ, O_{b} bezogene Elemente und Bezugszeichen sind im Allgemein mit einem O indiziert.

### Bezugszeichenliste

- 1, 1', 1": Lager
- 1a: Außenbereich
- 1b: Innenbereich
- 1c: Abgrenzung
- 2: Transportsystem
- 3a: manuelle Depalettierungsstation
- 3b: automatische Depalettierungsstation
- 4: Lagergutträgerstation
- 5: Kommissionierabschnitt
- 5a: Kommissionierabschnitt
- 5b: Kommissionierpufferabschnitt
- 6: Sequenzierungsabschnitte
- 7: Packstation
- 8: Lagergutträgermagazin
- 9: Leerpalettenmagazin
- 10: Lagerabschnitt/Cluster
- 10a - 10n: Lagerabschnitt/Cluster
- 11: Kommunikationseinrichtungen
- 12: Sensorik
- 13: Bedieneinheiten
- 100: Lagersystem
- 100' 100a 100b 100a' 100b' 101: Lagerraum
- 102: Gehäuse
- 103 103ₒ 103ₗ: Beschickungs- und/oder Entnahmeöffnung
- 104 104iₒ: Beschickungs- und/oder Entnah104aₒ - mestelle
- 105: Türelement
- 106: Bedieneinrichtung

- 107: Lagerabteil
- 108: Umlaufeinrichtung
- 109 109a - 109i: Lagerplätze
- 110: Antriebseinrichtung
- 200: Transportvorrichtungen
- 200' 200" 200b 200b' 200a": Abschnitte der 200"
- 200b" 200e: Transportvorrichtungen
- 200c: Spiralförderer
- 201: Transportbahnen
- 201a: Transportbahnen
- 201b 201a' 201b' 201aₒ: Transportbahn
- 201bₒ: Transportbahn
- 201aₗ: Transportbahn
- 201bₗ: Transportbahn
- 202: Ständer
- 203: Transfereinrichtungen
- 300 300' 300": Beschickungs- und/oder Entnahmevorrichtungen
- 300a: Depalettierungsstation
- 300b 301: Verschiebeeinrichtung
- 301ₒ: Verschiebeeinrichtung der 300'
- 301ₗ 302: Verschiebeachsen
- 302a 302b 303: Aufhängungen
- 304: Schiene
- 305: Elektromotor
- 306: Achse
- 307: Getriebe
- 319: Zugelement
- 320: Sensorik
- 400: Lagergutträger
- 400a - 400i 400aₗ - 400iₗ 401: Aufnahmefläche
- 444: Lagergutträgerabtrenneinrichtungen
- 402: Rand
- 403: Stirnseiten
- 404: Handhabungselement
- 500: Lagergüter
- 500a - 500i 500aₒ - 500iₒ 500aₗ - 500iₗ 500a - 500i: Lagergüter
- 600: Palettenlager
- 601: Palette
- 602: Depalettierungsplätze
- 603: Depalettierungsroboter
- 700: Versandstationen
- 701: Packplätzen
- 800: Bedienpersonen
- 900: Lagersteuerungssystem
- 910: Computer
- 911: Ausgabeeinrichtung
- 912: Recheneinheit
- 913: Bedieneinheit
- 914: Lese- und/oder Schreibeinheit
- 920: Lagerverwaltungssystem
- 922: Lagerbeständeerfassungsmodul
- 923: Transportwegeermittlungsmodul
- 924: Kommissionierdauerberechnungsmodul
- 930: Computerprogrammprodukt
- 1000: Auftrag
- I: Einlagerungsrichtung
- O: Auslagerungsrichtung
- T, Tₐ, T_{b}, T_{a,O₁} T_{a, l}: Transportrichtungen
- X: Seitrichtung
- Y: Höhenrichtung
- Z: Querrichtung

## Patentansprüche

1. Lager (1, 1', 1") zur Kommissionierung von auf Lagergutträgern (400) abgelegten Stückgutartikeln (500), insbesondere zur Kommissionierung von Paletten (601), mit Lagerplätzen (119) für die Lagergutträger (400), wobei die Lagerplätze (119) auf wenigstens zwei separate automatisierte Lagersysteme (100, 100', 100a, 100b, 100'a, 100'b) aufgeteilt sind, die jeweils an wenigstens eine Transportbahn (201, 201a, 201b, 201_{O}, 201_{I}) zum automatischen Transport der Lagergutträger (400) grenzen, wobei die wenigstens zwei Transportbahnen (201, 201a, 201b, 201_{O}, 201_{I}) zu einer weiteren Transportbahn (201, 201a, 201b, 201_{O}, 201_{I}) zum geordneten Abtransport der kommissionierten Lagergutträger (400) zu einer Packstation (7) führen, und wobei die wenigstens zwei separaten Lagersysteme (100, 100', 100a, 100b, 100'a, 100'b) sich an den zumindest zwischen den wenigstens zwei separaten Lagersystemen (100, 100', 100a, 100b, 100'a, 100'b) parallel nebeneinander verlaufenden wenigstens zwei Transportbahnen (201, 201a, 201b, 201_{O}, 201_{I}) gegenüberliegend angeordnet sind, **dadurch gekennzeichnet, dass** eine Verschiebeeinrichtung (301, 301_{O}, 301_{I}) zum Verschieben von Lagergutträgern (400) aus den wenigstens zwei Lagersystemen (100, 100', 100a, 100b, 100'a, 100'b) auf die jeweilige Transportbahn (201, 201a, 201b, 201_{O}, 201_{I}) und zum Verschieben von Lagergutträgern (400) von den wenigstens zwei Transportbahnen (201, 201a, 201b, 201_{O}, 201_{I}) in das jeweilige Lagersystem (100, 100', 100a, 100b, 100'a, 100'b)zwischen den wenigstens zwei Transportbahnen (201, 201a, 201b, 201_{O}, 201_{I}) angeordnet ist.

2. Lager (1, 1', 1") nach Anspruch 1, **dadurch gekennzeichnet, dass** die wenigstens zwei Lagersysteme (100, 100', 100a, 100b, 100'a, 100'b) an der weiteren Transportbahn (201, 201a, 201b, 201_{O}, 201_{I}) sich gegenüberliegend angeordnet sind.

3. Lager (1, 1', 1") nach Anspruch 1 oder 2, **dadurch gekennzeichnet, dass** die Transportbahn (201, 201a, 201b, 201_{O}, 201_{I}) und/oder die weitere Transportbahn (201, 201a, 201b, 201_{O}, 201_{I}) zumindest abschnittsweise parallel ober- oder unterhalb einer zusätzlichen Transportbahn (201, 201a, 201b, 201_{O}, 201_{I}) bzw. zusätzlichen weiteren Transportbahn verlaufen, und wobei die wenigstens zwei Lagersysteme (100, 100', 100a, 100b, 100'a, 100'b) jeweils wenigstens zwei Beschickungs- und/oder Entnahmestellen (104, 104a - 104i) aufweisen, über welche wenigstens zwei Lagergutträger (400) gleichzeitig in die wenigstens zwei Lagersysteme (100, 100', 100a, 100b, 100'a, 100'b) ein bzw. aus den wenigstens zwei Lagersystemen (100, 100', 100a, 100b, 100'a, 100'b) ausgelagert werden können.

4. Lager (1, 1', 1") nach Anspruch 3, **dadurch gekennzeichnet, dass** die wenigstens zwei Beschickungs- und/oder Entnahmestellen (104, 104a - 104i) der wenigstens zwei Lagersysteme (100, 100', 100a, 100b, 100'a, 100'b) jeweils neben- und/oder übereinander angeordnet sind.

5. Lager (1, 1', 1") nach einem der Ansprüche 1 bis 4, **dadurch gekennzeichnet, dass** eine automatisierte Beschickungs- und/oder Entnahmevorrichtung (300, 300') zum Einlagern von Lagergutträgern in die wenigstens zwei Lagersysteme (100, 100', 100a, 100b, 100'a, 100'b) bzw. Auslagern von Lagergutträgern (400) aus den wenigstens zwei Lagersystemen (100, 100', 100a, 100b, 100'a, 100'b) zwischen den wenigstens zwei Lagersystemen (100, 100', 100a, 100b, 100'a, 100'b) angeordnet ist.

6. Lager (1, 1', 1") nach einem der Ansprüche 1 bis 5, wobei die wenigstens zwei Lagersysteme (100, 100', 100a, 100b, 100'a, 100'b) als Paternosterlager und/oder Lagerlift ausgestaltet sind.

7. Lager (1, 1', 1") nach einem der Ansprüche 1 bis 6, **dadurch gekennzeichnet, dass** es ein Lagerverwaltungssystem (920) zur Steuerung des Lagers (1, 1', 1") umfasst, wobei ein Kommissionierungsreihenfolgemodul (921) vorgesehen ist, das ausgestaltet ist, im Betrieb des Lagers (1, 1', 1") aus den wenigstens zwei Lagersystemen (100, 100', 100a, 100b, 100'a, 100'b) parallel und/oder seriell entnommene Lagergutträger (400) auf einer in die Packstation (7) mündenden Transportvorrichtung (200, 200', 200") in einer Palettierungsreihenfolge aufzureihen.

8. Lager (1, 1', 1") nach Anspruch 7, **dadurch gekennzeichnet, dass** das Lagerverwaltungssystem (920) ein Lagerbeständeerfassungsmodul (922), ein Transportwegeermittlungsmodul (923) und ein Kommissionierungsdauerberechnungsmodul (924) umfasst, wobei das Lagerbeständeerfassungsmodul (921) ausgestaltet ist, Lagerbestände von Stückgutartikeln in den wenigstens zwei Lagersystemen zu erfassen, das Transportwegeermittlungsmodul (923) ausgestaltet ist, Transportwege zwischen den erfassten Lagerbeständen und der Packstation (7) zu ermitteln, und das Kommissionierungsdauerberechnungsmodul (923) ausgestaltet ist, in Abhängigkeit von den ermittelten Lagerbeständen und Transportwegen eine kürzestmögliche Kommissionierungsdauer zu errechnen.

9. Verfahren zum Kommissionieren von Stückgutartikeln, die von Lagergutträgern (400) getragen auf Lagerplätzen (109) gelagert und auf einer Transportbahn (201, 201a, 201b, 201_{O}, 201_{I}) transportiert werden, wobei die Lagerplätze (109) auf wenigstens zwei automatisierte Lagersysteme (100, 100', 100a, 100b, 100'a, 100'b) aufgeteilt und von diesen über jeweils eine Transportbahn (201, 201a, 201b, 201_{O}, 201_{I}) zu einer weiteren Transportbahn (201, 201a, 201b, 201_{O}, 201_{I}) befördert werden, auf der die Lagergutträger (400) in einer Palettierungsreihenfolge geordnet abtransportiert werden, **dadurch gekennzeichnet, dass** die Lagergutträger (400) aus den wenigstens zwei Lagersystemen (100, 100', 100a, 100b, 100'a, 100'b) auf die jeweilige Transportbahn (201, 201a, 201b, 201_{O}, 201_{I}) und in einem anderen Verfahrensschritt von den wenigstens zwei Transportbahnen (201, 201a, 201b, 201_{O}, 201_{I}) in das jeweilige Lagersystem (100, 100', 100a, 100b, 100'a, 100'b), jeweils durch eine zwischen den wenigstens zwei Transportbahnen (201, 201a, 201b, 201_{O}, 201_{I}) angeordnete Verschiebeeinrichtung (301, 301_{O}, 301_{I}), verschoben werden.

10. Verfahren nach Anspruch 9, **dadurch gekennzeichnet, dass** wenigstens zwei einer zu kommissionierenden Warenmenge zugeordnete Lagergutträger (400) gleichzeitig aus wenigstens einem der Lagersysteme (100, 100', 100a, 100b, 100'a, 100'b) aus und/oder in wenigstens eines der Lagersysteme (100, 100', 100a, 100b, 100'a, 100'b) eingelagert werden.

11. Verfahren nach Anspruch 9 oder 10, **dadurch gekennzeichnet, dass** Stückartikel auf den Lagergutträgern in den wenigstens zwei Lagersystemen (100, 100', 100a, 100b, 100'a, 100'b) vorkommissioniert werden.

12. Verfahren nach einem der Ansprüche 9 bis 11, **dadurch gekennzeichnet, dass** gleiche Stückgutartikel in wenigstens zwei der wenigstens zwei Lagersysteme (100, 100', 100a, 100b, 100'a, 100'b) gelagert werden.

13. Verfahren nach einem der Ansprüche 9 bis 12, **dadurch gekennzeichnet, dass** die Lagergutträger (400) in einer vordefinierten Stapelreihenfolge auf der weiteren Transportbahn (201, 201a, 201b, 201_{O}, 201_{I}) zur Packstation (7) transportiert werden.

## Claims

1. Warehouse (1, 1', 1") for picking piece goods (500) stored on stock carriers (400), in particular for picking pallets (601), comprising storage areas (119) for the stock carriers (400), the storage areas (119) being divided into at least two separate, automated warehouse systems (100, 100', 100a, 100b, 100'a, 100'b) which are each adjacent to at least one transport path (201, 201a, 201b, 201ₒ, 201ₗ) for automatically transporting the stock carriers (400), the at least two transport paths (201, 201a, 201b, 201ₒ, 201ₗ) leading to a further transport path (201, 201a, 201b, 201ₒ, 201ₗ) for transporting the picked stock carriers (400) away to a packing station (7) in an organised manner, and the at least two separate warehouse systems (100, 100', 100a, 100b, 100'a, 100'b) being arranged so as to be opposite one another on the at least two transport paths (201, 201a, 201b, 201ₒ, 201ₗ) which extend in parallel at least between the at least two separate warehouse systems (100, 100', 100a, 100b, 100'a, 100'b), **characterised in that** a movement device (301, 301ₒ, 301ₗ) for moving stock carriers (400) from the at least two warehouse systems (100, 100', 100a, 100b, 100'a, 100'b) onto the respective transport paths (201, 201a, 201b, 201ₒ, 201ₗ) and for moving stock carriers (400) from the at least two transport paths (201, 201a, 201b, 201ₒ, 201ₗ) into the relevant warehouse system (100, 100', 100a, 100b, 100'a, 100'b) is arranged between the at least two transport paths (201, 201a, 201b, 201ₒ, 201ₗ).

2. Warehouse (1, 1', 1") according to claim 1, **characterised in that** the at least two warehouse systems (100, 100', 100a, 100b, 100'a, 100'b) are arranged so as to be opposite one another on the further transport path (201, 201a, 201b, 201ₒ, 201ₗ).

3. Warehouse (1, 1', 1") according to either claim 1 or claim 2, **characterised in that** the transport path (201, 201a, 201b, 201ₒ, 201ₗ) and/or the further transport path (201, 201a, 201b, 201ₒ, 201ₗ) extend, at least in portions, in parallel with and above or below an additional transport path (201, 201a, 201b, 201ₒ, 201ₗ) or additional further transport path, and the at least two warehouse systems (100, 100', 100a, 100b, 100'a, 100'b) each comprising at least two loading and/or removal points (104, 104a-104i), by means of which at least two stock carriers (400) can be simultaneously transferred into the at least two warehouse systems (100, 100', 100a, 100b, 100'a, 100'b) or out of the at least two warehouse systems (100, 100', 100a, 100b, 100'a, 100'b).

4. Warehouse (1, 1', 1") according to claim 3, **characterised in that** the at least two loading and/or removal points (104, 104a-104i) of the at least two warehouse systems (100, 100', 100a, 100b, 100'a, 100'b) are each arranged beside and/or above one another.

5. Warehouse (1, 1', 1") according to any of claims 1 to 4, **characterised in that** an automated loading and/or removal apparatus (300, 300') for transferring stock carriers into the at least two warehouse systems (100, 100', 100a, 100b, 100'a, 100'b) or for transferring stock carriers (400) out of the at least two warehouse systems (100, 100', 100a, 100b, 100'a, 100'b) is arranged between the at least two warehouse systems (100, 100', 100a, 100b, 100'a, 100'b).

6. Warehouse (1, 1', 1") according to any of claims 1 to 5, wherein the at least two warehouse systems (100, 100', 100a, 100b, 100'a, 100'b) are designed as a paternoster warehouse and/or a warehouse lift.

7. Warehouse (1, 1', 1") according to any of claims 1 to 6, **characterised in that** it comprises a warehouse management system (920) for controlling the warehouse (1, 1', 1"), a picking sequence module (921) being provided which is designed, during operation of the warehouse (1, 1', 1"), to line up stock carriers (400), which are removed from the at least two warehouse systems (100, 100', 100a, 100b, 100'a, 100'b) in parallel and/or in series, in a palletising sequence on a transport apparatus (200, 200', 200") leading to the packing station (7).

8. Warehouse (1, 1', 1") according to claim 7, **characterised in that** the warehouse management system (920) comprises a stock detection module (922), a transport-route determination module (923) and a picking-duration calculation module (924), the stock detection module (921) being designed to detect stock of piece goods in the at least two warehouse systems, the transport-route determination module (923) being designed to determine transport routes between the detected stock and the packing station (7), and the picking-duration calculation module (923) being designed to calculate the shortest possible picking duration on the basis of the determined stock and transport routes.

9. Method for picking piece goods which are carried by stock carriers (400), are stored on storage areas (109) and transported on a transport path (201, 201a, 201b, 201ₒ, 201ₗ), the storage areas (109) being divided into at least two automated warehouse systems (100, 100', 100a, 100b, 100'a, 100'b) and being conveyed by said systems, via one transport path (201, 201a, 201b, 201ₒ, 201ₗ) in each case, to a further transport path (201, 201a, 201b, 201ₒ, 201ₗ), on which the stock carriers (400) are transported away in a palletising sequence in an organised manner, **characterised in that** the stock carriers (400) are moved from the at least two warehouse systems (100, 100', 100a, 100b, 100'a, 100'b) onto the respective transport paths (201, 201a, 201b, 201ₒ, 201ₗ) and are, in another step, moved from the at least two transport paths (201, 201a, 201b, 201ₒ, 201ₗ) into the relevant warehouse system (100, 100', 100a, 100b, 100'a, 100'b) by a movement device (301, 301ₒ, 301ₗ) arranged between the at least two transport paths (201, 201a, 201b, 201ₒ, 201ₗ).

10. Method according to claim 9, **characterised in that** at least two stock carriers (400) assigned to a quantity of goods to be picked are simultaneously transferred out of at least one of the warehouse systems (100, 100', 100a, 100b, 100'a, 100'b) and/or into at least one of the warehouse systems (100, 100', 100a, 100b, 100'a, 100'b).

11. Method according to either claim 9 or claim 10, **characterised in that** piece goods on the stock carriers in the at least two warehouse systems (100, 100', 100a, 100b, 100'a, 100'b) are pre-picked.

12. Method according to any of claims 9 to 11, **characterised in that** identical piece goods are stored in at least two of the at least two warehouse systems (100, 100', 100a, 100b, 100'a, 100'b).

13. Method according to any of claims 9 to 12, **characterised in that** the stock carriers (400) are transported to the packing station (7) on the further transport path (201, 201a, 201b, 201ₒ, 201ₗ) in a predefined stack sequence.

## Revendications

1. Entrepôt de stockage (1, 1', 1") pour la préparation de commandes composées d'articles de marchandise (500) placées dans des supports de marchandises à stocker (400), notamment pour la préparation de commandes sur palettes (601), comprenant des emplacements de stockage (119) pour les supports de marchandises à stocker (400), entrepôt de stockage
dans lequel les emplacements de stockage (119) sont répartis sur au moins deux systèmes de stockage automatisés (100, 100', 100a, 100b, 100'a, 100'b) séparés, qui sont voisins chacun d'au moins une voie de transport (201, 201a, 201b, 201ₒ, 201ₗ) pour le transport automatique des supports de marchandises à stocker (400),
dans lequel lesdites au moins deux voies de transport (201, 201a, 201b, 201ₒ, 201ₗ) mènent à une autre voie de transport (201, 201a, 201b, 201ₒ, 201ₗ) pour le transport d'évacuation ordonné des supports de marchandises à stocker (400) préparés conformément aux commandes, jusqu'à un poste d'emballage (7), et
dans lequel lesdits au moins deux systèmes de stockage séparés (100, 100', 100a, 100b, 100'a, 100'b) sont agencés de manière mutuellement opposée au niveau desdites au moins deux voies de transport (201, 201a, 201b, 201ₒ, 201ₗ) s'étendant parallèlement côte à côte au moins entre lesdits au moins deux systèmes de stockage séparés (100, 100', 100a, 100b, 100'a, 100'b),
**caractérisé en ce qu'**entre lesdites au moins deux voies de transport (201, 201a, 201b, 201ₒ, 201ₗ) est agencé un dispositif de translation (301, 301_{ο}, 301ₗ) pour assurer un transfert de supports de marchandises à stocker (400) en provenance desdits au moins deux systèmes de stockage (100, 100', 100a, 100b, 100'a, 100'b) sur la voie de transport (201, 201a, 201b, 201ₒ, 201ₗ) respectivement correspondante, et pour assurer le transfert de supports de marchandises à stocker (400) à partir desdites au moins deux voies de transport (201, 201a, 201b, 201ₒ, 201ₗ) sur le système de stockage (100, 100', 100a, 100b, 100'a, 100'b) respectivement associé.

2. Entrepôt de stockage (1, 1', 1") selon la revendication 1, **caractérisé en ce que** lesdits au moins deux systèmes de stockage (100, 100', 100a, 100b, 100'a, 100'b) sont agencés de manière mutuellement opposée au niveau de ladite autre voie de transport (201, 201a, 201b, 201ₒ, 201ₗ).

3. Entrepôt de stockage (1, 1', 1") selon la revendication 1 ou la revendication 2, **caractérisé en ce que** la voie de transport (201, 201a, 201b, 201ₒ, 201ₗ) et/ou ladite autre voie de transport (201, 201a, 201b, 201ₒ, 201ₗ) s'étendent, au moins par secteurs, parallèlement au-dessus ou en-dessous d'une voie de transport supplémentaire (201, 201a, 201b, 201ₒ, 201ₗ) ou respectivement d'une autre voie de transport supplémentaire, et **en ce que** lesdits au moins deux systèmes de stockage (100, 100', 100a, 100b, 100'a, 100'b) présentent chacun au moins deux postes de chargement et/ou de prélèvement (104, 104a - 104i) par l'intermédiaire desquels au moins deux supports de marchandises à stocker (400) peuvent être simultanément chargés en vue de leur stockage dans lesdits au moins deux systèmes de stockage (100, 100', 100a, 100b, 100'a, 100'b), ou respectivement déstockés desdits au moins deux systèmes de stockage (100, 100', 100a, 100b, 100'a, 100'b).

4. Entrepôt de stockage (1, 1', 1") selon la revendication 3, **caractérisé en ce que** lesdits au moins deux postes de chargement et/ou de prélèvement (104, 104a - 104i) desdits au moins deux systèmes de stockage (100, 100', 100a, 100b, 100'a, 100'b) sont respectivement agencés les uns à côté des autres et/ou les uns au-dessus des autres.

5. Entrepôt de stockage (1, 1', 1") selon l'une des revendications 1 à 4, **caractérisé en ce qu'**un dispositif automatisé de chargement et/ou de prélèvement (300, 300') est agencé entre lesdits au moins deux systèmes de stockage (100, 100', 100a, 100b, 100'a, 100'b), pour charger en vue de leur stockage, des supports de marchandises à stocker dans lesdits au moins deux systèmes de stockage (100, 100', 100a, 100b, 100'a, 100'b), ou respectivement déstocker des supports de marchandises à stocker (400) desdits au moins deux systèmes de stockage (100, 100', 100a, 100b, 100'a, 100'b).

6. Entrepôt de stockage (1, 1', 1") selon l'une des revendications 1 à 5, dans lequel lesdits au moins deux systèmes de stockage (100, 100', 100a, 100b, 100'a, 100'b) sont configurés sous la forme d'entrepôt de stockage du type pater-noster et/ou d'entrepôt de stockage à navette.

7. Entrepôt de stockage (1, 1', 1") selon l'une des revendications 1 à 6, **caractérisé en ce qu'**il comprend un système de gestion d'entrepôt de stockage (920) pour la commande de l'entrepôt de stockage (1, 1', 1''), ensemble dans lequel il est prévu un module d'ordonnancement de préparation de commandes (921), qui est configuré pour, en cours de fonctionnement de l'entrepôt de stockage (1, 1', 1''), ranger selon un ordre de palettisation, des supports de marchandises à stocker (400) prélevés en parallèle et/ou en série desdits au moins deux systèmes de stockage (100, 100', 100a, 100b, 100'a, 100'b), sur un dispositif de transport (200, 200', 200") débouchant dans le poste d'emballage (7).

8. Entrepôt de stockage (1, 1', 1") selon la revendication 7, **caractérisé en ce que** le système de gestion d'entrepôt de stockage (920) comprend un module de relevé de l'état du stock (922), un module de détermination de chemin de transport (923) et un module de calcul de durée de préparation de commande (924), ensemble dans lequel le module de relevé de l'état du stock (922) est configuré pour relever des états de stock d'articles de marchandises dans lesdits au moins deux systèmes de stockage, le module de détermination de chemin de transport (923) est configuré pour déterminer des chemins de transport entre les états de stock relevés et le poste d'emballage (7), et le module de calcul de durée de préparation de commande (924) est configuré pour calculer, en fonction des états de stock et des chemins de transport déterminés, une durée de préparation de commande la plus courte possible.

9. Procédé pour la préparation de commandes composées d'articles de marchandise, qui, portés par des supports de marchandises à stocker (400), sont stockées dans des emplacements de stockage (109), et sont transportés sur une voie de transport (201, 201a, 201b, 201ₒ, 201ₗ), procédé d'après lequel les emplacements de stockage (109) sont répartis sur au moins deux systèmes de stockage automatisés (100, 100', 100a, 100b, 100'a, 100'b), et les supports de marchandise à stocker sont transportés à partir de là, par l'intermédiaire d'une voie de transport (201, 201a, 201b, 201ₒ, 201ₗ) respective, jusqu'à une autre voie de transport (201, 201a, 201b, 201ₒ, 201ₗ) sur laquelle les supports de marchandises à stocker (400) sont évacués par transport en étant ordonnés conformément à un ordre de palettisation, **caractérisé en ce que** les supports de marchandises à stocker (400) sont déplacés par translation par un dispositif de translation (301, 301_{ο}, 301ₗ) agencé entre lesdits au moins deux voies de transport (201, 201a, 201b, 201ₒ, 201ₗ), pour être transférés desdits au moins deux systèmes de stockage (100, 100', 100a, 100b, 100'a, 100'b) vers la voie de transport (201, 201a, 201b, 201ₒ, 201ₗ) respectivement correspondante, et, dans une autre étape du processus, pour être transférés à partir desdites au moins deux voies de transport (201, 201a, 201b, 201ₒ, 201ₗ), dans le système de stockage (100, 100', 100a, 100b, 100'a, 100'b) respectivement associé.

10. Procédé selon la revendication 9, **caractérisé en ce qu'**au moins deux supports de marchandises à stocker (400) associés à une quantité de marchandise à préparer conformément à une commande, sont simultanément déstockés d'au moins l'un des systèmes de stockage (100, 100', 100a, 100b, 100'a, 100'b), et/ou stockés dans l'un au moins des systèmes de stockage (100, 100', 100a, 100b, 100'a, 100'b).

11. Procédé selon la revendication 9 ou la revendication 10, **caractérisé en ce que** des articles de marchandise sont préparés préalablement conformément aux commandes sur les supports de marchandises à stocker, dans lesdits au moins deux systèmes de stockage (100, 100', 100a, 100b, 100'a, 100'b).

12. Procédé selon l'une des revendications 9 à 11, **caractérisé en ce que** des articles de marchandise identiques sont stockés dans au moins deux desdits au moins deux systèmes de stockage (100, 100', 100a, 100b, 100'a, 100'b).

13. Procédé selon l'une des revendications 9 à 12, **caractérisé en ce que** les supports de marchandises à stocker (400) sont transportés selon un ordre d'empilement prédéfini, sur ladite autre voie de transport (201, 201a, 201b, 201ₒ, 201ₗ) vers le poste d'emballage (7).
